(19) Europäisches Patentamt / European Patent Office / Office européen des brevets

(11) **EP 4 447 040 B1**

(12) **EUROPEAN PATENT SPECIFICATION**

(45) Date of publication and mention of the grant of the patent:
**10.06.2026 Bulletin 2026/24**

(21) Application number: **23864486.8**

(22) Date of filing: **24.07.2023**

(51) International Patent Classification (IPC):
**G10L 13/02** $^{(2013.01)}$

(52) Cooperative Patent Classification (CPC):
**G10L 13/08; G10L 13/033; G10L 13/047**

(86) International application number:
**PCT/CN2023/108845**

(87) International publication number:
**WO 2024/055752 (21.03.2024 Gazette 2024/12)**

(54) **SPEECH SYNTHESIS MODEL TRAINING METHOD, SPEECH SYNTHESIS METHOD, AND RELATED APPARATUSES**

VERFAHREN ZUM TRAINIEREN EINES SPRACHSYNTHESEMODELLS, SPRACHSYNTHESEVERFAHREN UND ZUGEHÖRIGE VORRICHTUNGEN

PROCÉDÉ D'APPRENTISSAGE DE MODÈLE DE SYNTHÈSE VOCALE, PROCÉDÉ DE SYNTHÈSE VOCALE ET APPAREILS ASSOCIÉS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.09.2022 CN 202211121568**

(43) Date of publication of application:
**16.10.2024 Bulletin 2024/42**

(73) Proprietor: **Tencent Technology (Shenzhen) Company Limited**
**Shenzhen, Guangdong 518057 (CN)**

(72) Inventors:
• **SONG, Kun**
  **Shenzhen, Guangdong 518057 (CN)**
• **YANG, Bing**
  **Shenzhen, Guangdong 518057 (CN)**
• **ZHANG, Xiong**
  **Shenzhen, Guangdong 518057 (CN)**

(74) Representative: **Nederlandsch Octrooibureau**
**P.O. Box 29720**
**2502 LS The Hague (NL)**

(56) References cited:
WO-A1-2020/145472    CN-A- 111 462 769
CN-A- 113 793 591    CN-A- 113 808 576
US-B2- 10 896 669

• KUN SONG ET AL: "AdaVITS: Tiny VITS for Low Computing Resource Speaker Adaptation", ARXIV.ORG, CORNELL UNIVERSITY LIBRARY, 201 OLIN LIBRARY CORNELL UNIVERSITY ITHACA, NY 14853, 1 June 2022 (2022-06-01), XP091236773
• XU TAN ET AL: "A Survey on Neural Speech Synthesis", ARXIV.ORG, CORNELL UNIVERSITY LIBRARY, 201 OLIN LIBRARY CORNELL UNIVERSITY ITHACA, NY 14853, 23 July 2021 (2021-07-23), XP091006255
• SONG KUN, XUE HEYANG, WANG XINSHENG, CONG JIAN, ZHANG YONGMAO, XIE LEI, YANG BING, ZHANG XIONG, SU DAN: "AdaVITS: Tiny VITS for Low Computing Resource Speaker Adaptation", ARXIV (CORNELL UNIVERSITY), CORNELL UNIVERSITY LIBRARY, ARXIV.ORG, ITHACA, 1 June 2022 (2022-06-01), Ithaca, XP093146203, Retrieved from the Internet <URL:https://arxiv.org/pdf/2206.00208v1.pdf> [retrieved on 20240327]

EP 4 447 040 B1

**Description**

RELATED APPLICATION

This application claims priority to Chinese Patent Application No. 202211121568.X, filed with the China Intellectual Property Administration on September 15, 2022 and entitled "TRAINING METHOD FOR SPEECH SYNTHESIS MODEL AND SPEECH SYNTHESIS METHOD AND RELATED APPARATUSES".

FIELD OF THE TECHNOLOGY

The present disclosure relates to the field of speech synthesis, and in particular, to speech synthesis.

BACKGROUND OF THE DISCLOSURE

Speech synthesis refers to synthesizing, according to speech recorded by a user for a part of texts, speech of other texts that matches a timbre of the user.

In the related art, one multi-user acoustic model and one vocoder are usually pre-trained. The acoustic model is configured to convert the text into a spectral feature that matches a timbre of a user, and the vocoder is configured to convert the spectral feature into speech signal. An encoder in the acoustic model is configured to model text information, and a decoder in the acoustic model is configured to model acoustic information. By using a recording of a target user, information of the target user may be introduced into an input of the encoder, thereby performing fine-tuning on the acoustic model, and then obtaining a spectral feature that matches a timbre of the target user and corresponds to the text. Then, the speech signal may be synthesized through the vocoder based on an upsampling structure, thereby obtaining a synthesized speech that matches the timbre of the target user and corresponds to the text. For example, the acoustic model is a Fastspeech model, and the vocoder is a high-fidelity generative adversarial network (HifiGAN).

Speech synthesis is performed through the foregoing model. Due to a large quantity of model parameters, computing complexity is high. In a scenario with low computing resources, such as synthesizing speech in a terminal, there may be a case that a lot of computing resources are consumed, making it difficult to deploy the model.

Document "AdaVITS: Tiny VITS for Low Computing Resource Speaker Adaptation" discloses a tiny VITS-based [1] TTS model, named AdaVITS, for low computing resource speaker adaptation. To effectively reduce parameters and computational complexity of VITS, an iSTFT-based wave construction decoder is used to replace the upsampling-based decoder which is resource-consuming in the original VITS. Besides, NanoFlow is introduced to share the density estimate across flow blocks to reduce the parameters of the prior encoder. Furthermore, to reduce the computational complexity of the textual encoder, scaled-dot attention is replaced with linear attention. To deal with the instability caused by the simplified model, instead of using the original text encoder, phonetic posteriorgram (PPG) is utilized as linguistic feature via a text-to-PPG module, which is then used as input for the encoder.

SUMMARY

The present disclosure provides a training method for a speech synthesis model, speech synthesis method and apparatus, and a device, to reduce computing resources consumed by the model and implement deployment of the model in a device with low computing resources. The technical solutions are as follows.

According to an aspect of the present disclosure, a training method for a speech synthesis model, performed by a computer device, the method including:

obtaining a sample phoneme of a target user and a timbre identifier of the target user, the sample phoneme being determined based on a sample text corresponding to sample speech of the target user, and the timbre identifier is configured for identifying a timbre of the target user;

inputting the sample phoneme into a first submodel of the speech synthesis model, to obtain a predicted phonetic posteriorgram of the sample phoneme, the predicted phonetic posteriorgram being configured for reflecting a feature of each phoneme in the sample phoneme and a pronunciation duration feature of each phoneme in the sample phoneme;

inputting the predicted phonetic posteriorgram and the timbre identifier into a second submodel of the speech synthesis model, to obtain predicted speech corresponding to the sample text and the timbre identifier, the second submodel obtaining the predicted speech by predicting the predicted phonetic posteriorgram and a predicted intermediate variable of the predicted speech, and the predicted intermediate variable being configured for reflecting a frequency domain feature of the predicted speech;

training the first submodel according to the predicted phonetic posteriorgram; and training the second submodel according to the predicted speech and the predicted intermediate variable,

where the second submodel includes a prior encoder and a decoder; and wherein the inputting the predicted phonetic posterior feature and the timbre identifier into a second submodel of the speech synthesis model, to obtain predicted speech corresponding to the sample text and the timbre identifier includes:

inputting the predicted phonetic posterior feature and the timbre identifier into the prior encoder, to obtain the predicted intermediate variable; and

performing inverse Fourier transform on the predicted intermediate variable through the decoder, to obtain the predicted speech,

where the decoder includes an inverse Fourier transform structure and an upsampling structure; and the performing inverse Fourier transform on the predicted intermediate variable through the decoder, to obtain the predicted speech includes:
obtaining the predicted speech by restoring a low-frequency part of the predicted speech through the upsampling structure and modeling a medium-high frequency part of the predicted speech through the inverse Fourier transform structure.

According to another aspect of the present disclosure, speech synthesis method is provided, performed by a computer device, the computer device including the speech synthesis model obtained through training by performing the method according to the foregoing aspect, and the method including:

obtaining a target phoneme of a target user and a timbre identifier of the target user, the target phoneme being determined based on a target text, and the timbre identifier being configured for identifying a timbre of the target user;

inputting the target phoneme into a first submodel of the speech synthesis model, to obtain a phonetic posteriorgram of the target phoneme; and

inputting the phonetic posteriorgram and the timbre identifier into a second submodel of the speech synthesis model, to obtain target speech corresponding to the target text and the timbre identifier.

According to another aspect of the present disclosure, a training apparatus for a speech synthesis model is provided, including:

an obtaining module, configured to obtain a sample phoneme of a target user and a timbre identifier of the target user, the sample phoneme being determined based on a sample text corresponding to sample speech of the target user, and the timbre identifier being configured for identifying a timbre of the target user;

an input/output module, configured to input the sample phoneme into a first submodel of the speech synthesis model, to obtain a predicted phonetic posteriorgram of the sample phoneme, the predicted phonetic posteriorgram being configured for reflecting a feature of each phoneme in the sample phoneme and a pronunciation duration feature of each phoneme in the sample phoneme;

the input/output module, being further configured to input the predicted phonetic posteriorgram and the timbre identifier into a second submodel of the speech synthesis model, to obtain predicted speech corresponding to the sample text and the timbre identifier, the second submodel obtaining the predicted speech by predicting the predicted phonetic posteriorgram and a predicted intermediate variable of the predicted speech, and the predicted intermediate variable being configured for reflecting a frequency domain feature of the predicted speech;

a training module, configured to train the first submodel according to the predicted phonetic posteriorgram; and training the second submodel according to the predicted speech and the predicted intermediate variable.

According to another aspect of the present disclosure, speech synthesis apparatus is provided, the apparatus including the speech synthesis model obtained by training through the apparatus according to the foregoing aspect, and the apparatus including:

an obtaining module, configured to obtain a target phoneme of a target user and a timbre identifier of the target user, the target phoneme being determined based on a target text, and the timbre identifier is configured for identifying a timbre of the target user;

an input/output module, configured to input the target phoneme into a first submodel of the speech synthesis model, to obtain a phonetic posteriorgram of the target phoneme; and

the input/output module, being further configured to input the phonetic posteriorgram and the timbre identifier into a second submodel of the speech synthesis model, to obtain target speech corresponding to the target text and the timbre identifier.

According to another aspect of the present disclosure, a computer device is provided, including a processor and a memory, the memory storing at least one instruction, at least one program, a code set, or an instruction set, the at least one instruction, the at least one program, the code set, or the instruction set being loaded and executed by the processor to implement the training method for a speech synthesis model or the speech synthesis method according to the foregoing aspect.

According to another aspect of the present disclosure, a computer-readable storage medium is provided, storing at least one instruction, at least one program, a code set, or an instruction set, the at least one instruction, the at least one program, the code set, or the instruction set being loaded and executed by a processor to implement the training method for a speech synthesis model or the speech synthesis method according to the foregoing aspect.

According to another aspect of the present disclosure, a computer program product is provided, including a computer program, the computer program, when run on a computer, causing the computer to perform the training method for a speech synthesis model or the speech synthesis method according to the foregoing aspect.

Beneficial effects of the technical solutions that are provided in the present disclosure are at least as follows: By training the speech synthesis model, the speech synthesis model may generate target speech that matches a timbre of a target user according to a timbre identifier of the target user and a target text. A process of synthesizing the target speech is implemented by predicting an intermediate variable through a predicted phonetic posteriorgram. Because the phonetic posteriorgram includes less information than a spectral feature, fewer model parameters are required by the predicted phonetic posteriorgram, which may reduce parameters of the model, thereby reducing the computing resources consumed by the model, and implementing the deployment of the model in the device with low computing resources.

BRIEF DESCRIPTION OF THE DRAWINGS

FIG. 1 is a schematic diagram of a structure of a speech synthesis model according to an exemplary embodiment of the present disclosure.

FIG. 2 is a schematic flowchart of a training method for a speech synthesis model according to an exemplary embodiment of the present disclosure.

FIG. 3 is a schematic flowchart of a training method for a speech synthesis model according to an exemplary embodiment of the present disclosure.

FIG. 4 is a schematic diagram of a structure of a text encoder according to an exemplary embodiment of the present disclosure.

FIG. 5 is a schematic diagram of a structure of an inverse Fourier transform decoder according to an exemplary embodiment of the present disclosure.

FIG. 6 is a schematic diagram of a structure of another inverse Fourier transform decoder according to an exemplary embodiment of the present disclosure.

FIG. 7 is a schematic diagram of a structure of a regularized flow layer according to an exemplary embodiment of the present disclosure.

FIG. 8 is a schematic diagram of a structure of a multi-scale spectrum discriminator according to an exemplary embodiment of the present disclosure.

FIG. 9 is a schematic flowchart of a speech synthesis method according to an exemplary embodiment of the present disclosure.

FIG. 10 is a schematic diagram of a structure of a training apparatus for a speech synthesis model according to an exemplary embodiment of the present disclosure.

FIG. 11 is a schematic diagram of a structure of a speech synthesis apparatus according to an exemplary embodiment of the present disclosure.

FIG. 12 is a schematic diagram of a structure of a computer device according to an exemplary embodiment of the present disclosure.

DESCRIPTION OF EMBODIMENTS

To make the objectives, technical solutions, and advantages of the present disclosure clearer, the following further describes implementations of the present disclosure in detail with reference to the accompanying drawings.

First, related terms involved in embodiments of the present disclosure are introduced as follows:

**Artificial intelligence (AI)** is a theory, method, technology, and application system that uses a digital computer or a machine controlled by the digital computer to simulate, extend, and expand human intelligence, perceive an environment, obtain knowledge, and use knowledge to obtain an optimal result. In other words, the AI is a comprehensive technology of computer sciences, attempts to understand essence of intelligence, and produces a new intelligent machine that can react in a manner similar to human intelligence. The AI is to study the design principles and implementation methods of various intelligent machines, to enable the machines to have the functions of perception, reasoning, and decision-making.

The AI technology is a comprehensive discipline, covering a wide range of fields including both a hardware-level technology and a software-level technology. The basic AI technology generally includes a technology such as a sensor, a dedicated AI chip, cloud computing, distributed storage, a big data processing technology, an operation/interaction system, or mechatronics. An AI software technology mainly includes fields such as a computer vision (CV) technology, a speech processing technology, a natural language processing technology, and machine learning/deep learning (DL).

Key technologies of the **speech technology** include an automatic speech recognition (ASR) technology, a text to speech (TTS) technology, and a voiceprint recognition technology. To make a computer capable of listening, seeing, speaking, and feeling is the future development direction of man-machine interaction, and speech has become one of the most promising man-machine interaction methods in the future.

A **phoneme** is a minimum phonetic unit obtained through division according to a natural attribute of speech, analysis is performed according to a pronunciation action in a syllable, and an action forms a phoneme. Phonemes may be divided into two categories: vowels and consonants. For example, A Chinese syllable ah ($\bar{a}$) has only one phoneme, and love (ài) has two phonemes.

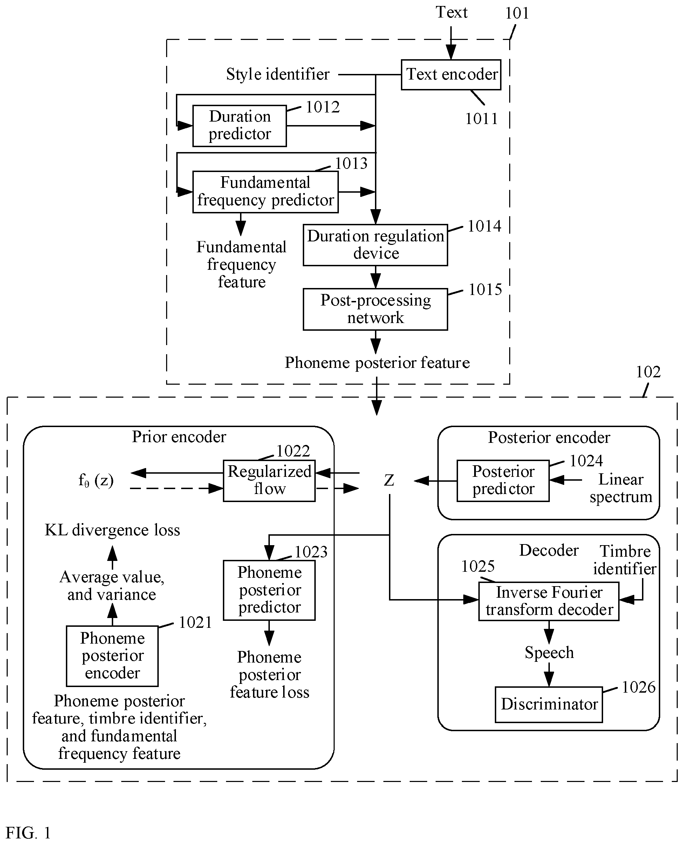

FIG. 1 is a schematic diagram of a structure of a speech synthesis model according to an exemplary embodiment of the present disclosure. As shown in FIG. 1, a speech synthesis model includes a first submodel 101 and a second submodel 102. In the embodiments of the present disclosure including the embodiments of both the claims and specification (hereinafter referred to as "all embodiments of the present disclosure"), the first submodel may referred to as a text-to-phonetic posteriorgram (Text2PPG) model, and the second submodel may referred to as a phonetic posteriorgram-to-speech (PPG2Wav) model.

**Model training stage:**

A computer device obtains sample speech of a target user, a timbre identifier of the target user, a sample text corresponding to the sample speech, and a style identifier, determines a sample phoneme that makes up the sample text according to the sample text, determines a real pronunciation duration feature of each phoneme in the sample phoneme according to the sample speech, and determines a real phonetic posteriorgram (PPG) of the sample phoneme according to the sample speech. Then, the sample phoneme and the style identifier are input into the first submodel 101, and encoding is performed on the sample phoneme according to the style identifier through a text encoder 1011, to obtain a hidden layer feature of the sample phoneme corresponding to the style identifier. In addition, the hidden layer feature of the sample phoneme is predicted through a duration predictor 1012, to obtain a predicted pronunciation duration feature corresponding to each phoneme in the sample phoneme corresponding to the style identifier. In addition, the hidden layer feature of the sample phoneme is predicted through a fundamental frequency predictor 1013, to obtain a fundamental frequency feature corresponding to the style identifier and the sample phoneme. Different style identifiers have corresponding model parameters. Then, the computer device performs frame expansion processing on the hidden layer feature of the sample phoneme through a duration regulation device 1014 according to a real pronunciation duration feature corresponding to each phoneme in the sample phoneme, and performs convolution processing on the hidden layer feature of the sample phoneme obtained after frame expansion through a post-processing network 1015, thereby obtaining a predicted phonetic posteriorgram of the sample phoneme. The predicted phonetic posteriorgram is configured for reflecting a feature of each phoneme in the sample phoneme and a pronunciation duration feature of each phoneme in the sample phoneme; When training the first submodel 101, the computer device calculates a loss function between the predicted phonetic posteriorgram and a real phonetic posteriorgram, and trains the first submodel. In addition, the computer device calculates a loss function between the predicted pronunciation duration feature and the real pronunciation duration feature, and trains the first submodel.

The features of the sample phoneme are determined according to the sample speech of the user and the timbre identifier of the user. The features of the sample phoneme include a pronunciation duration feature, a phonetic posterior gram and a fundamental frequency feature. The pronunciation duration feature includes a real pronunciation duration feature and a predicted pronunciation duration feature. The phonetic posterior gram includes a real phonetic posterior gram and a predicted phonetic posterior gram. The predicted pronunciation duration feature is obtained by predicting based on a hidden layer feature of the sample phoneme, and the hidden layer feature is obtained by encoding the sample phoneme according to a style identifier of the sample speech. Frame expansion is performed on the hidden layer feature of the sample phoneme according to the real pronunciation duration feature of the sample phoneme, and convolution processing is performed on the hidden layer feature of the sample phoneme subjected to the frame expansion to obtain the predicted phonetic posterior gram of the sample phoneme.

Then, the computer device inputs the predicted phonetic posteriorgram, the timbre identifier, and the fundamental frequency feature into the second submodel 102, and samples an average value and a variance of prior distribution of a predicted intermediate variable through a phonetic posterior encoder 1021 (also referred to as a PPG encoder) in a prior encoder, to obtain the predicted intermediate variable. The predicted intermediate variable is an intermediate variable in a process of synthesizing predicted speech through the predicted phonetic posteriorgram, and the predicted intermediate variable is configured for reflecting a frequency domain feature of the predicted speech. The computer device further inputs sample speech (linear spectrum) into a posterior predictor 1024 of a posterior encoder, and samples an average value and a variance of posterior distribution of a real intermediate variable, thereby obtaining the real intermediate variable. In addition, the computer device performs affine coupling processing on the real intermediate variable through a regularized flow layer 1022 of a prior encoder, thereby obtaining a processed real intermediate variable. Then, the computer device calculates a relative entropy loss (also referred to as a Kulbach Leibler (KL) divergence loss) between the predicted intermediate variable and the processed real intermediate variable, to train the second submodel. In addition, the prior encoder further includes a phonetic posterior predictor 1023 (PPG predictor), and the phonetic posterior predictor 1023 is configured for predicting, in a process of pre-training the second submodel, a predicted phonetic posteriorgram in the pre-training process according to a predicted intermediate variable in the pre-training process, so that the computer device may calculate, in the process of pre-training the second submodel, a loss function between the predicted phonetic posteriorgram in the pre-training process and the real phonetic posteriorgram in the pre-training process, thereby performing pre-training on the second submodel. After obtaining the predicted intermediate variable, the computer device performs inverse Fourier transform on the predicted intermediate variable according to the timbre identifier through an inverse Fourier transform decoder 1025 of a decoder, thereby obtaining predicted speech. Then, the computer device calculates a Mel spectrum loss between the predicted speech and the sample speech, and trains the second submodel. In addition, in the model structure shown in FIG. 1, a discriminator 1026 in the decoder and parts other than the discriminator 1026 in the speech synthesis model may form a generative adversarial network. The computer device inputs the predicted speech into the discriminator 1026, to obtain a discrimination result of the predicted speech. Then the computer device determines a generative adversarial loss according to the discrimination result and a real source of the predicted speech, and may train the generative adversarial network.

**Speech synthesis stage:**

The computer device obtains a target phoneme of a target user, a timbre identifier of the target user, and a target style identifier. The target phoneme is determined according to a target text. By inputting the target phoneme and the target style identifier into the first submodel 101, the computer device may obtain a phonetic posteriorgram of the target phoneme corresponding to the target style identifier and a target fundamental frequency feature corresponding to the target style identifier and the target phoneme. Then, the computer device inputs the phonetic posteriorgram, the timbre identifier, and the target fundamental frequency feature into the second submodel 102, thereby obtaining the target speech corresponding to the target text, the timbre identifier, and the target style identifier. The target text determines pronunciation content of the target speech, the timbre identifier determines a timbre of the target speech, and the target style identifier determines a pronunciation style of the target speech, including pronunciation duration and a fundamental frequency of each phoneme.

In the model training stage, frame expansion processing is performed, through the pronunciation duration feature, on the fundamental frequency feature input by the computer device into the second submodel 102. In the speech synthesis stage, the pronunciation duration feature used by the computer device for frame expansion in the first submodel 101 is predicted by the duration predictor 1012. In addition, in the speech synthesis stage, the regularized flow layer 1022 in the second submodel 102 performs reverse flow transformation (opposite to a data flow direction during training) on an intermediate variable output by the phonetic posterior encoder 1021, and inputs the intermediate variable into the decoder for processing, thereby obtaining the target speech. In addition, the phonetic posterior predictor 1023 in the second submodel 102 does not participate in the speech synthesis process.

By training the speech synthesis model, the speech synthesis model may generate target speech that matches a timbre of a target user according to a timbre identifier of the target user and a target text. A process of synthesizing the target speech is implemented by predicting an intermediate variable through a predicted phonetic posteriorgram and through inverse Fourier transform. Because the phonetic posteriorgram includes less information than a spectral feature, fewer model parameters are required by the predicted phonetic posteriorgram, and the inverse Fourier transform requires fewer model parameters than upsampling, which may reduce parameters of the model, thereby reducing computing resources consumed by the model, and implementing deployment of the model in a device with low computing resources.

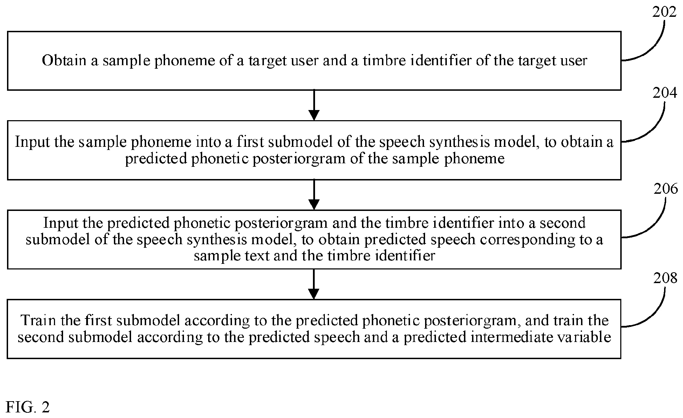

FIG. 2 is a schematic flowchart of a training method for a speech synthesis model according to an exemplary embodiment of the present disclosure. The method may be used on a computer device or on a client on a computer device. As shown in FIG. 2, this method includes:

**Step 202:** Obtain a sample phoneme of a target user and a timbre identifier of the target user.

The target user is a user who needs to perform speech synthesis. A speech synthesis model obtained by training by the computer device may synthesize speech that matches a timbre of the target user and whose content is a target text.

In all embodiments of the present disclosure, the computer device may further obtain a sample text corresponding to sample speech of the target user, and the sample text includes text content corresponding to the sample speech. The sample speech and the sample text may support different types of languages, and this is not limited in all embodiments of the present disclosure. For example, the sample speech is obtained by recording pronunciation of a small quantity of texts of the target user. The sample phoneme is determined based on the sample text corresponding to the sample speech of the target user.

The timbre identifier of the target user is configured for identifying the timbre of the target user. When training the speech synthesis model, the timbre identifier may be configured for establishing a corresponding relationship between the model parameter learned by the model and the timbre identifier. Therefore, by inputting the timbre identifier into the model when synthesizing the speech, speech that conforms to the timbre corresponding to the timbre identifier (a model parameter corresponding to the timbre identifier) may be synthesized.

**Step 204:** Input the sample phoneme into a first submodel of a speech synthesis model, to obtain a predicted phonetic posteriorgram of the sample phoneme.

The predicted phonetic posteriorgram is configured for reflecting a feature of each phoneme in the sample phoneme and a pronunciation duration feature of each phoneme in the sample phoneme; The "phonetic posteriorgram" may also be referred to as "PPG".

In all embodiments of the present disclosure, the computer device may extract a hidden layer feature of the sample phoneme through the first submodel, and predicts the pronunciation duration feature of each phoneme in the sample phoneme through the first submodel or obtains a real pronunciation duration feature of each phoneme in the sample phoneme according to the sample speech, thereby obtaining the pronunciation duration feature of each phoneme in the sample phoneme. Then, according to the hidden layer feature of the sample phoneme and the pronunciation duration feature of each phoneme in the sample phoneme, the computer device may determine the predicted phonetic posteriorgram of the sample phoneme. In all embodiments of the present disclosure, a determining process may be implemented by the computer device by performing frame expanding on the hidden layer feature of the sample phoneme through the pronunciation duration feature of each phoneme in the sample phoneme.

In all embodiments of the present disclosure, a sample phoneme is encoded by a text encoder, to obtain a hidden layer feature of the sample phoneme. The text encoder has an FFT (Fast Fourier transform) structure. Different style identifiers are inputted to the first submodel, to generate voices with different styles adapting to different application scenarios. The pronunciation duration feature indicates a pronunciation duration of the phoneme. The pronunciation duration feature is obtained by a duration predictor by predicting the hidden layer of the sample phoneme. A model parameter of the duration predictor is related to the style identifier. Frame expanding is performed on the hidden layer feature of the sample phoneme based on the pronunciation duration feature. After the frame expanding is completed, the sample phoneme includes the hidden layer feature and the pronunciation duration feature, thereby obtaining the predicted phonetic posteriorgram. Frame expanding indicates repeating elements in a sequence of hidden layer features. For example, a first phoneme of the sample phoneme has a pronunciation duration of 5. When frame expanding is performed, an element in the sequence of hidden layer features corresponding to the first phoneme is repeated for five times.

**Step 206:** Input the predicted phonetic posteriorgram and the timbre identifier into a second submodel of the speech synthesis model, to obtain predicted speech corresponding to the sample text and the timbre identifier.

Content of the predicted speech is the sample text, and the timbre of the predicted speech is the timbre corresponding to the timbre identifier, namely, the timbre of the target user identified by the timbre identifier. The second submodel predicts the predicted phonetic posteriorgram and the predicted intermediate variable of the predicted speech, and obtains the predicted speech from the predicted intermediate variable. The predicted intermediate variable is configured for reflecting a frequency domain feature of the predicted speech. The predicted intermediate variable is an intermediate variable predicted by the second submodel in a process of determining the predicted speech. The predicted intermediate variable may also be referred to as a predicted latent variable.

In a possible implementation, the predicted speech may be obtained based on inverse Fourier transform. In other words, the second submodel of the speech synthesis model obtains the predicted speech based on the inverse Fourier transform by predicting the predicted phonetic posteriorgram and the predicted intermediate variable of the predicted speech.

**Step 208:** Train the first submodel according to the predicted phonetic posteriorgram, and train the second submodel according to the predicted speech and a predicted intermediate variable.

The computer device determines a real phonetic posteriorgram according to the sample speech, and may train the first submodel by calculating a loss function between the predicted phonetic posteriorgram and the real phonetic posteriorgram. The computer device may train the second submodel by calculating a loss function between the sample speech and the predicted speech.

In all embodiments of the present disclosure, the loss function between sample speech and predicted speech may be referred to Mel spectrum losses of the sample speech and the predicted speech. The computer device may determine the loss function to train the second submodel by converting the predicted speech and the sample speech into Mel spectra respectively, and calculate an L1 norm distance of the Mel spectra of the predicted speech and the sample speech.

The computer device further obtains the sample speech and the real intermediate variable corresponding to the predicted phonetic posteriorgram. In all embodiments of the present disclosure, the real intermediate variable may be determined according to the sample speech. The computer device calculates a loss function between the predicted intermediate variable and the real intermediate variable, to train the second submodel. In all embodiments of the present disclosure, the loss function may refer to a relative entropy loss (KL divergence loss).

The trained speech synthesis model is obtained by pre-training. Pre-training is training performed on the speech synthesis model by using pre-trained data, and may refer to the foregoing training process. An objective of the foregoing training process of the speech synthesis model is to learn the frequency domain feature (which may be referred to as phoneme cloning fine-tuning training) of pronunciation of the target user, that is, to learn the timbre of the target user, and establish a corresponding relationship between the learned model parameter and the timbre identifier. After completing the training of the speech synthesis model, the speech synthesis model may synthesize target speech that matches the timbre (input timbre identifier) of the target user and whose content is the target text (different from the sample text).

The speech synthesis model obtained by training by the method provided in all embodiments of the present disclosure may be deployed and run in a device with low computing resources. The device with the low computing resource includes a user terminal. The user terminal includes but is not limited to a mobile phone, a computer, an intelligent speech interaction device, a smart home appliance, a vehicle-mounted terminal, an aircraft, and the like.

In summary, in the method provided in all embodiments of the present disclosure, by training the speech synthesis model, the speech synthesis model may generate target speech that matches the timbre of the target user according to the timbre identifier of the target user and the target text. A process of synthesizing the target speech is implemented by predicting an intermediate variable through a predicted phonetic posteriorgram and through inverse Fourier transform. Because the phonetic posteriorgram includes less information than a spectral feature, fewer model parameters are required by the predicted phonetic posteriorgram, and the inverse Fourier transform requires fewer model parameters than upsampling, which may reduce parameters of the model, thereby reducing computing resources consumed by the model, and implementing deployment of the model in a device with low computing resources.

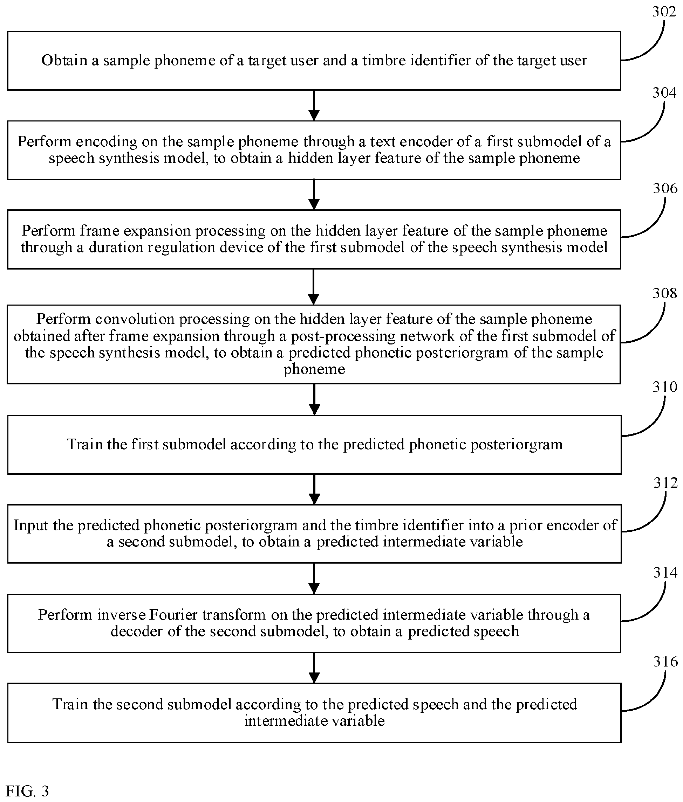

FIG. 3 is a schematic flowchart of a training method for a speech synthesis model according to an exemplary embodiment of the present disclosure. The method may be used on a computer device or on a client on a computer device. As shown in FIG. 3, the method includes the following steps.

**Step 302:** Obtain a sample phoneme of a target user and a timbre identifier of the target user.

The target user is a user who needs to perform speech synthesis, and the target user is determined by a user who trains or uses the speech synthesis model. In all embodiments of the present disclosure, the computer device may further obtain a sample text corresponding to sample speech of the target user, the sample text includes text content corresponding to the sample speech, and the sample phoneme is determined based on the sample text corresponding to the sample speech of the target user.

The timbre identifier of the target user is configured for identifying information of the target user. When training the speech synthesis model, the timbre identifier may be configured for establishing a corresponding relationship between the model parameter learned by the model and the timbre identifier. Therefore, by inputting the timbre identifier into the model when synthesizing the speech, speech that conforms to the timbre (a timbre of the target user) corresponding to the timbre identifier may be synthesized.

**Step 304:** Perform encoding on the sample phoneme through the text encoder of the first submodel of the speech synthesis model, to obtain a hidden layer feature of the sample phoneme.

The computer device inputs the sample phoneme into a first submodel of the speech synthesis model, to obtain a predicted phonetic posteriorgram of the sample phoneme. The predicted phonetic posteriorgram is configured for reflecting a feature of each phoneme in the sample phoneme and a pronunciation duration feature of each phoneme in the sample phoneme;

The first submodel may be referred to as a Text2PPG model, which is configured for converting an input phoneme sequence into a language feature that includes more pronunciation information. The first submodel includes a text encoder, a duration regulation device, and a post-processing network. The computer device performs encoding on the sample phoneme through the text encoder, to obtain the hidden layer feature of the sample phoneme.

In all embodiments of the present disclosure, the text encoder may use a feed-forward transformer (FFT) structure. Each FFT module includes a multi-head self-attention module and a convolution module. After the self-attention module and the convolution module, a residual connection and a layer normalization structure are also added, thereby improving stability and performance of the structure.

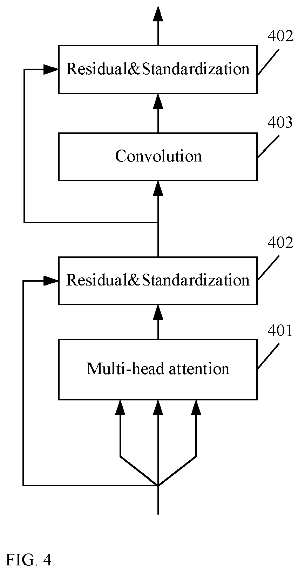

For example, FIG. 4 is a schematic diagram of a structure of a text encoder according to an exemplary embodiment of the present disclosure. As shown in FIG. 4, the text encoder includes a multi-head attention layer 401, a residual & normalization layer (Add & Norm) 402, and a convolutional layer (Conv1D) 403. The multi-head attention layer 401 uses a linear attention mechanism. For example, a formula of the linear attention mechanism is as follows:

$$\text{Attention} = \phi(Q)(\phi(K)^T V);$$

and

$$\phi(x) = \varphi(x) = 1 + \text{elu}\,(x) = \begin{cases} 1 + x, x \geq 0 \\ e^x, x < 0 \end{cases},$$

where

Q, K, and V each represent a hidden layer representation sequence of a sample phoneme. Because it needs to be ensured that an inner product of Q and K is a positive number, so that an output probability is meaningful, an exponential linear unit (ELU) function is used in linear attention, so that matrix multiplication may be first performed on $\phi(K)^T$ and V, and computing complexity is O(N). In addition, a sample user or acoustic related information is not considered in the first submodel, so that an output is only related to the input phoneme sequence. Compared with dot product attention, the linear attention mechanism may reduce computing complexity while ensuring an attention effect.

**Step 306:** Perform frame expansion processing on the hidden layer feature of the sample phoneme through a duration regulation device of the first submodel of the speech synthesis model.

Because the phonetic posteriorgram may reflect complete pronunciation information, and the phonetic posteriorgram includes information of the pronunciation duration of each phoneme, the pronunciation duration feature corresponding to each phoneme in the sample phoneme needs to be determined, and frame expansion needs to be performed on the hidden layer feature of the sample phoneme.

The computer device may further obtain a real pronunciation duration feature corresponding to each phoneme in the sample phoneme. For example, the computer device obtains sample speech, and by performing analysis processing on the sample speech, may obtain the real pronunciation duration feature corresponding to each phoneme in the sample phoneme. For example, through the pre-trained duration model, the real pronunciation duration feature corresponding to each phoneme in the sample phoneme may be determined according to the sample speech. The computer device may perform frame expansion processing on the hidden layer feature of the sample phoneme through the duration regulation device according to the real pronunciation duration feature corresponding to each phoneme in the sample phoneme.

**Step 308:** Perform convolution processing on the hidden layer feature of the sample phoneme obtained after frame expansion through the post-processing network of the first submodel of the speech synthesis model, to obtain the predicted phonetic posteriorgram of the sample phoneme.

After frame expansion processing is performed on the hidden layer feature of the sample phoneme, the information is input into the post-processing network, and the post-processing network performs convolution processing on the input information, to perform smooth processing on the input information. Because the phonetic posteriorgram after frame expansion already includes a phoneme feature and a pronunciation duration feature, the predicted phonetic posteriorgram of the sample phoneme may be obtained.

**Step 310:** Train the first submodel according to the predicted phonetic posteriorgram.

The computer device further obtains a real phonetic posteriorgram of the sample phoneme. For example, by inputting the sample speech into a speech recognition model, the real phonetic posteriorgram of the sample phoneme may be obtained. The computer device trains the first submodel by calculating a loss function between the predicted phonetic posteriorgram and the real phonetic posteriorgram. For example, the loss function is an L2 norm loss.

In all embodiments of the present disclosure, because a real pronunciation duration feature cannot be obtained when synthesizing speech, the first submodel may further include a duration predictor. When training the first submodel, the computer device predicts the hidden layer feature of the sample phoneme through the duration predictor, thereby obtaining the predicted pronunciation duration feature corresponding to each phoneme in the sample phoneme. Then, the computer device calculates a loss function between the predicted pronunciation duration feature and the real pronunciation duration feature, and trains the first submodel. For example, the loss function is an L2 norm loss.

After the training is completed, the real pronunciation duration feature configured for being input into the duration regulation device is replaced with the predicted pronunciation duration feature obtained by the duration predictor.

In addition, because a recording of a sample user is often rapid and emotionless, different styles of speech need to be synthesized for different speech synthesis scenarios. The style includes the pronunciation duration (duration of a pronunciation pause) of each phoneme in the speech and a fundamental frequency (a change of the fundamental frequency). In all embodiments of the present disclosure, the speech style may be identified by a style identifier. The computer device may control the model to generate predicted phonetic posteriorgrams adapted to different scenarios by using different style identifiers. In all embodiments of the present disclosure, in this solution, the computer device may further obtain the style identifier, and performs encoding on the sample phoneme through the text encoder according to the style identifier, to obtain the hidden layer feature of the sample phoneme corresponding to the style identifier.

Different style identifiers have corresponding model parameters. In other words, the input style identifiers are different, and the model parameters of the model are also different. This affects the hidden layer feature obtained by performing encoding on the sample phoneme by the first submodel. After inputting different style identifiers, the hidden layer feature of the sample phoneme in the styles corresponding to different style identifiers may be obtained. The influence of the style identifier on the hidden layer feature affects a subsequent input of the model, for example, affects the pronunciation duration feature (outputs the predicted pronunciation duration feature corresponding to the sample phoneme and the style identifier) predicted by the duration predictor and affects the fundamental frequency feature (outputs the fundamental frequency feature corresponding to the style identifier and the sample phoneme) predicted by the fundamental frequency predictor. In all embodiments of the present disclosure, in a process of pre-training the first submodel, the computer device may perform training by using pre-training data of different styles and corresponding style identifiers, so that the first submodel may learn model parameters corresponding to different styles.

In all embodiments of the present disclosure, the first submodel may further include a fundamental frequency predictor. The computer device predicts the hidden layer feature of the sample phoneme through the fundamental frequency predictor, to obtain the fundamental frequency feature corresponding to the style identifier and the sample phoneme. The fundamental frequency feature is configured for being input into the second submodel to obtain the predicted speech corresponding to the style identifier, that is, to obtain the predicted speech of the style corresponding to the style identifier. Because the style of the speech is related to the fundamental frequency, and adding fundamental frequency prediction may improve a prediction effect of the predicted phonetic posteriorgram, in all embodiments of the present disclosure, the computer device may further splice the fundamental frequency feature obtained by predicting by the fundamental frequency predictor onto the output of the text encoder.

For example, for a structure of the first submodel, refer to the example in FIG. 1.

**Step 312:** Input the predicted phonetic posteriorgram and the timbre identifier into the prior encoder of the second submodel, to obtain the predicted intermediate variable.

The computer device inputs the predicted phonetic posteriorgram and the timbre identifier into a second submodel of the speech synthesis model, to obtain predicted speech corresponding to the sample text and the timbre identifier. The second submodel obtains the predicted speech based on the inverse Fourier transform by predicting the predicted phonetic posteriorgram and the predicted intermediate variable of the predicted speech. The predicted intermediate variable is configured for reflecting the frequency domain feature of the predicted speech. Because the speech synthesis model uses the phonetic posteriorgram as a language feature, which already provides phonetic duration information, the second submodel does not need to consider information of modeling pronunciation duration.

The second submodel includes a prior encoder and a decoder. The computer device inputs the predicted phonetic posteriorgram and the timbre identifier into the prior encoder of the second submodel, to obtain the predicted intermediate variable.

In all embodiments of the present disclosure, the prior encoder may include a phonetic posterior encoder (PGG encoder). The computer device inputs the predicted phonetic posteriorgram and the timbre identifier into the phonetic posterior encoder, and samples an average value and a variance of prior distribution $p(z|c)$ of a predicted intermediate variable z through the phonetic posterior encoder and using condition information c including the predicted phonetic posteriorgram and the timbre identifier as a condition, to obtain the predicted intermediate variable. In all embodiments of the present disclosure, the phonetic posterior encoder may be based on an FFT structure, and uses a linear attention mechanism. For a specific structure, refer to the example in FIG. 4.

In all embodiments of the present disclosure, in a case that the first submodel outputs the fundamental frequency feature corresponding to the sample phoneme and the style identifier, the computer device may further obtain the fundamental frequency feature corresponding to the sample phoneme and the style identifier. The fundamental frequency feature is obtained by performing feature extraction on the sample phoneme through the first submodel based on the style identifier. The computer device inputs the predicted phonetic posteriorgram, the timbre identifier, and the fundamental frequency feature into the prior encoder, to obtain the predicted intermediate variable corresponding to the style identifier. In other words, the predicted intermediate variable has a style corresponding to the style identifier. predicted speech having a style corresponding to the style identifier may be synthesized through the predicted intermediate variable.

**Step 314:** Perform inverse Fourier transform on the predicted intermediate variable through the decoder of the second submodel, to obtain the predicted speech.

In all embodiments of the present disclosure, the decoder may include an inverse Fourier transform decoder. The computer device performs inverse Fourier transform on the predicted intermediate variable through the inverse Fourier transform decoder, to obtain the predicted speech. In all embodiments of the present disclosure, in actual application, if the style identifier of the target user is not input into the decoder, a similarity (the timbre similarity between the sample speech and the predicted speech) of timbre cloning of the target user can be significantly reduced. Therefore, the computer device inputs the predicted intermediate variable and the style identifier into the inverse Fourier transform decoder, and performs inverse Fourier transform on the predicted intermediate variable through the inverse Fourier transform decoder according to the style identifier, to obtain the predicted speech.

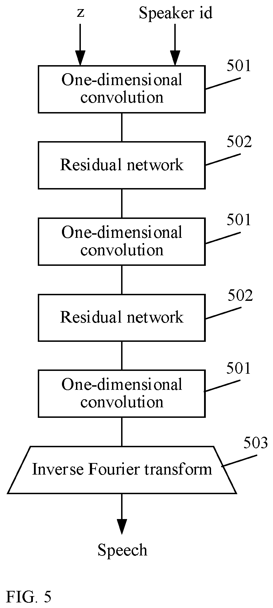

In all embodiments of the present disclosure, the inverse Fourier transform decoder includes a plurality of one-dimensional convolutional layers, and the last one-dimensional convolutional layer is connected to an inverse Fourier transform layer. For example, FIG. 5 is a schematic diagram of a structure of an inverse Fourier transform decoder according to an exemplary embodiment of the present disclosure. As shown in FIG. 5, z represents a predicted intermediate variable, and a speaker id represents a style identifier. A computer device may gradually increase the input dimensionality to $(f/2+1)*2$ by using a plurality of one-dimensional convolutional layers 501 through an inverse Fourier transform decoder, so that the output conforms to a total dimensionality of a real part and an imaginary part, where f represents a size of the fast Fourier transform. A stack of a residual network 502 follows each one-dimensional convolutional layer 501 to obtain more information at a corresponding scale. Because modeling is performed in a frequency domain dimension, expanded convolution is not used, but a smaller kernel size is used, to ensure that a receiving field is not too large. A calculation amount may be saved by using group convolution in the one-dimensional convolutional layer 501. After passing through the one-dimensional convolutional layer 501 and the residual network 502, the output is divided into the real part and the imaginary part, and a final waveform (predicted speech) may be generated through an inverse Fourier transform layer 503. In all embodiments of the present disclosure, a quantity of one-dimensional convolutional layers 501 may be determined according to an effect of model training.

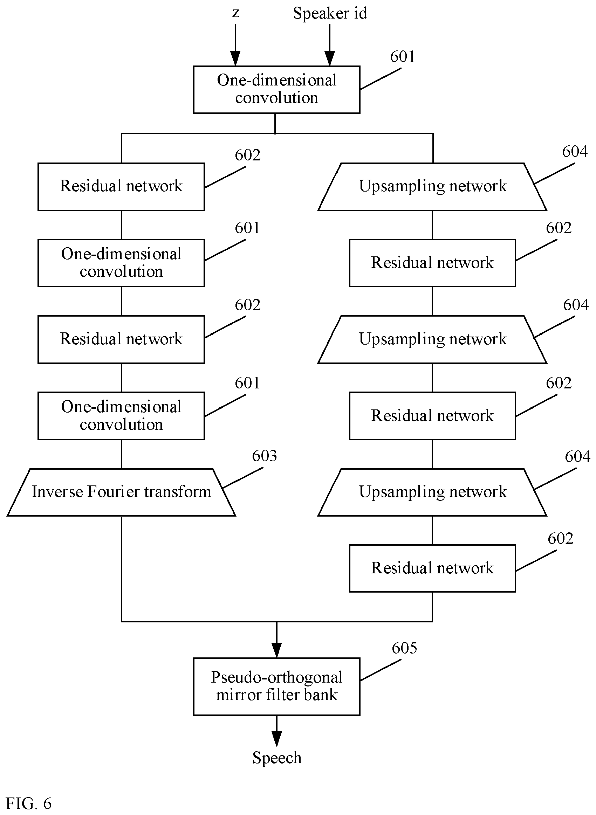

In all embodiments of the present disclosure, the inverse Fourier transform decoder may also be replaced by a combination of an upsampling structure and an inverse Fourier transform structure. For example, FIG. 6 is a schematic diagram of a structure of another inverse Fourier transform decoder according to an exemplary embodiment of the present disclosure. As shown in FIG. 6, z represents a predicted intermediate variable, and a speaker id represents a style identifier. Under the structure, the inverse Fourier transform decoder includes a one-dimensional convolutional layer 601, an inverse Fourier transform structure, an upsampling network structure, and a pseudo-orthogonal mirror filter bank 605. The inverse Fourier transform structure includes a residual network 602, the one-dimensional convolutional layer 601, and an inverse Fourier transform layer 603. The upsampling network structure includes an upsampling network 604 and a residual network 602.

Because a medium-high frequency feature of speech is better restored, and harmonics are mainly concentrated in a low-frequency part, the low-frequency part may be restored through the upsampling structure and the medium-high frequency may be modeled through the inverse Fourier transform layer. Then, the speech may be divided into a plurality of sub-bands through the pseudo-orthogonal mirror filter bank. A first sub-band is modeled by the upsampling structure, and the rest is generated by the structure shown in FIG. 5. Because the upsampling structure only models the low frequency, it means that an original upsampling structure reduces a large quantity of parameters and computing complexity. Although the solution has more parameters and calculation amounts than the structure shown in FIG. 5, a model effect is also improved. For different deployment scenarios, the solution may be used as a solution to adapt to computing and storage requirements of the scenario.

**Step 316:** Train the second submodel according to the predicted speech and the predicted intermediate variable.

The computer device further obtains sample speech, and calculates a mel spectrum loss between the predicted speech and the sample speech, to train the second submodel.

In all embodiments of the present disclosure, the second submodel may further include a posterior encoder. The computer device obtains the sample speech, and inputs the sample speech (linear spectrum) into the posterior encoder, to obtain a real intermediate variable between the sample speech and the predicted phonetic posteriorgram. The computer device trains the second submodel by calculating a relative entropy loss (KL divergence loss) between the predicted intermediate variable and the real intermediate variable.

In all embodiments of the present disclosure, the posterior encoder may include a posterior predictor (PPG predictor). The computer device inputs the sample speech into the posterior predictor, and samples the average value and the variance of the posterior distribution p(z|y) of the real intermediate variable, to obtain the real intermediate variable. y represents the sample speech.

In all embodiments of the present disclosure, the prior encoder may further include a regularized flow layer. The computer device performs affine coupling processing on the real intermediate variable through the regularized flow layer, thereby obtaining the processed real intermediate variable. When calculating the KL divergence loss, the computer device calculates the relative entropy loss between the predicted intermediate variable and the processed real intermediate variable, to train the second submodel. The regularized flow may transform an intermediate variable z into more complex distribution, and the KL divergence loss is configured for making distribution of the real intermediate variable consistent with distribution of the predicted intermediate variable.

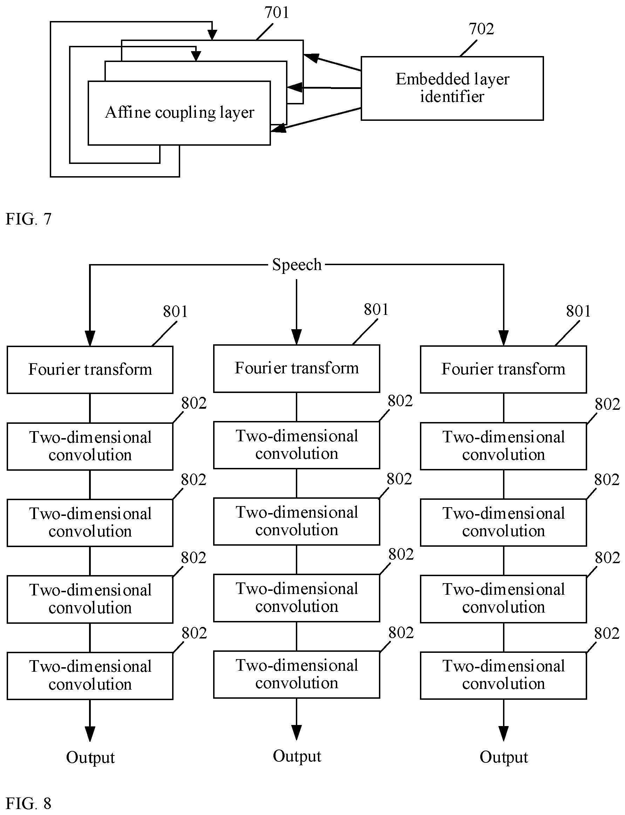

The regularized flow layer includes a plurality of affine coupling layers, and each affine coupling layer is configured for performing affine coupling processing on the real intermediate variable. Due to use of multi-layer processing, the regularized flow layer has a large quantity of parameters. In all embodiments of the present disclosure, model complexity can be reduced by causing different affine coupling layers to share model parameters. For example, FIG. 7 is a schematic diagram of a structure of a regularized flow layer according to an exemplary embodiment of the present disclosure. As shown in FIG. 7, by causing different affine coupling layers 701 to share model parameters, and each affine coupling layer 701 to correspond to an embedded layer identifier 702, parameters of the regularized flow layer are controlled to be a single layer, to reduce the model parameters. The embedded layer identifier is information configured for identifying the affine coupling layer. Each affine coupling layer has different embedded layer identifiers.

During training of the speech synthesis model, an intermediate variable z is converted into f(z) through a flow (regularized flow layer). In an inference process (speech synthesis), an output of a phonetic posterior encoder is transformed by a reverse flow to obtain the intermediate variable z. For example, an expression of the intermediate variable z is as follows:

$$p(z \mid c) = N(f_\theta(z); \mu_\theta(c), \sigma_\theta(c))) \left| \det \frac{\partial f_\theta(z)}{\partial z} \right|,$$

where

$f_\theta$ represents distribution, $\mu_\theta$ represents an average value, and $\sigma_\theta$ represents a variance.

In the absence of a clear constraint on the intermediate variable, the output predicted speech is prone to pronunciation errors such as mispronunciation and abnormal intonation. The method provided in all embodiments of the present disclosure provides a pronunciation constraint by introducing a phonetic posterior predictor (PPG predictor). In all embodiments of the present disclosure, the prior encoder may further include a phonetic posterior predictor, and the phonetic posterior predictor is configured to predict, in a process of pre-training the second submodel, a predicted phonetic posteriorgram in the pre-training process according to a predicted intermediate variable in the pre-training process. In the pre-training process of the second submodel, a loss function between the predicted phonetic posteriorgram in the pre-training process and a real phonetic posteriorgram in the pre-training process is calculated, and the second submodel is trained. In all embodiments of the present disclosure, the loss function may be an L1 norm loss. For example, an expression of the loss function is as follows:

$$L_{\mathrm{PPg}} = \| \mathrm{PPG1} - \mathrm{PPG2} \|_1,$$

where

PPG1 represents a predicted phonetic posteriorgram in a pre-training process, and PPG2 represents a real phonetic posteriorgram in the pre-training process.

The phonetic posterior predictor is only trained during pre-training the speech synthesis model and is frozen during phonetic clone fine-tuning training.

In summary, the loss function in a process of training the second submodel may be classified as a conditional variational auto encoder (CVAE) loss, and the loss function is as follows:

$$L_{\text{cvae}} = L_{\text{kl}} + \lambda_{\text{recon}} * L_{\text{recon}} + \lambda_{\text{ppg}} * L_{\text{ppg}},$$

where
$L_{\text{kl}}$ represents a KL divergence loss between a predicted intermediate variable and a real intermediate variable, $L_{\text{recon}}$ represents an L1 loss of a mel spectrum of sample speech and predicted speech, and $L_{\text{ppg}}$ represents a loss of a PPG predictor. $\lambda_{\text{recon}}$ and $\lambda_{\text{ppg}}$ are weight parameters.

In all embodiments of the present disclosure, the computer device may also input the real intermediate variable into the decoder, to obtain the predicted speech corresponding to the real intermediate variable, and then calculate the L1 loss of the Mel spectrum according to the predicted speech and the sample speech. In this case, the predicted intermediate variable obtained by the computer device is mainly configured for determining the KL divergence loss between the predicted intermediate variable and the real intermediate variable to train the second submodel.

In all embodiments of the present disclosure, the decoder may further include a discriminator, and the discriminator forms a generative adversarial network (GAN) with parts of the speech synthesis model other than the discriminator. The computer device inputs the predicted speech into the discriminator, to obtain a discrimination result of the predicted speech, where the discrimination result is configured for reflecting that the predicted speech is real information or predicted information. A generative adversarial loss is determined according to the discrimination result and a real source of the predicted speech, and the generative adversarial network is trained.

In all embodiments of the present disclosure, the discriminator may include a multi-scale spectral discriminator. The multi-scale spectral discriminator is particularly effective in the inverse Fourier transform decoder, and has a significant gain in high-frequency harmonic reconstruction. The computer device inputs the predicted speech into the multi-scale spectrum discriminator, performs short-time Fourier transform on the predicted speech on an amplitude spectrum through a plurality of sub-discriminators of the multi-scale spectrum discriminator, and performs two-dimensional convolution processing through a plurality of two-dimensional convolutional layers, to obtain a discrimination result of the predicted speech. Each sub-discriminator has different short-time Fourier transform parameters.

For example, FIG. 8 is a schematic diagram of a structure of a multi-scale spectrum discriminator according to an exemplary embodiment of the present disclosure. As shown in FIG. 8, the multi-scale spectrum discriminator includes a plurality of sub-discriminators with different short-time Fourier transform parameters. After inputting predicted speech into the discriminator, a real part and an imaginary part are obtained through a short-time Fourier transform layer 801, and then an amplitude is used to output a spectrum feature and a multi-layer two-dimensional convolutional layer 802 is passed through. In this way, frequency domain features of different resolutions in the predicted speech may be learnt, and then discrimination may be implemented.

In all embodiments of the present disclosure, the discriminator may include a multi-scale complex spectral discriminator. The multi-scale complex spectral discriminator models a relationship between the real part and the imaginary part of the speech signal, which helps improve phase accuracy of the discrimination. A computer device inputs the predicted speech into the multi-scale complex spectrum discriminator, performs short-time Fourier transform on the predicted speech on a complex spectrum through a plurality of sub-discriminators of the multi-scale complex spectrum discriminator, and performs two-dimensional complex convolution processing through a plurality of two-dimensional complex convolutional layers, to obtain a discrimination result of the predicted speech. Each sub-discriminator has different short-time Fourier transform parameters. The multi-scale complex spectrum discriminator divides a signal into a real part and an imaginary part at a plurality of scales through short-time Fourier transform, and then performs two-dimensional complex convolution on the input. The method has a good effect in a complex domain.

In summary, a loss function in a process of training the second submodel includes a CVAE loss and a GAN loss. An overall loss function is as follows:

$$L_{\text{G}} = L_{\text{adv}}(\text{G}) + \lambda_{\text{fm}} * L_{\text{fm}}(\text{G}) + L_{\text{cvae}};$$

and

$$L_{\text{D}} = L_{\text{adv}}(\text{D}),$$

where

$L_{adv}(G)$ is a loss of a generator in the GAN, and $L_{adv}(D)$ is a loss of a discriminator in the GAN. $L_{fm}(G)$ is a feature matching loss of the generator, and specifically refers to a loss between the output obtained by inputting real data and sample data into each network layer in the generator. $\lambda_{fm}$ is a weight parameter.

For example, for a structure of the second submodel, refer to the example in FIG. 1.

In summary, in the method provided in all embodiments of the present disclosure, by training the speech synthesis model, the speech synthesis model may generate target speech that matches the timbre of the target user according to the timbre identifier of the target user and the target text. A process of synthesizing the target speech is implemented by predicting an intermediate variable through a predicted phonetic posteriorgram and through inverse Fourier transform. Because the phonetic posteriorgram includes less information than a spectral feature, fewer model parameters are required by the predicted phonetic posteriorgram, and the inverse Fourier transform requires fewer model parameters than upsampling, which may reduce parameters of the model, thereby reducing computing resources consumed by the model, and implementing deployment of the model in a device with low computing resources.

In the method provided in all embodiments of the present disclosure, through the decoder of the inverse Fourier transform, different affine coupling layers of the regularized flow layer can share model parameters, a linear attention mechanism is used, and the phonetic posteriorgram instead of the spectral feature is extracted, thereby effectively reducing a quantity of model parameters and computing complexity

In a two-stage model (Fastspeech) in the related art, because the two-stage model is divided into an acoustic model and a vocoder, there are errors between the acoustic model and the vocoder, which leads to a loss of synthesized speech quality. The problem is more clear in cloning of a timbre of a small sample. However, a current end-to-end model (a model that inputs a text and directly outputs speech) still has a problem of unstable speech generation and even mispronunciation. This seriously affects a listening experience. In the method provided in all embodiments of the present disclosure, based on using modeling in an end-to-end manner, by introducing a style identifier, generating the phonetic posteriorgram according to a duration predictor and a fundamental frequency predictor, constraining an intermediate variable through a phonetic posterior predictor, constraining distribution of the intermediate variable through a regularized flow, and performing training by generating an adversarial network, the foregoing problems are improved, and performance of speech synthesis is improved.

How to effectively reduce parameters and computing complexity is an intuitive challenge. In the related art, because acoustic information and text information are modeled together, directly reducing model parameters leads to a rapid decline in a model effect. Model compression algorithms such as distillation and quantization also cause a significant performance loss. In the method provided in all embodiments of the present disclosure, a quantity of model parameters and computing complexity may be effectively reduced in a manner of reducing parameters, the model structure is constructed on an end-to-end basis, and the structure that improves performance is used to improve speech synthesis performance of the model, which may simultaneously reduce model parameters and improve model performance.

In the related art, due to rhythm problems such as a speed of a recording of the user, adaptability to an application scenario is poor. For example, in a navigation scenario, the user pursues a reading style that is straight and round, but because the model in the related art jointly models a timbre and content, a speech style that is generated is not suitable. In the method provided in all embodiments of the present disclosure, the timbre and the content may be further separately modeled, and the style identifier and the fundamental frequency are introduced to perform feature extraction and speech synthesis, so that speech in a reading style adapted to different scenarios may be synthesized.

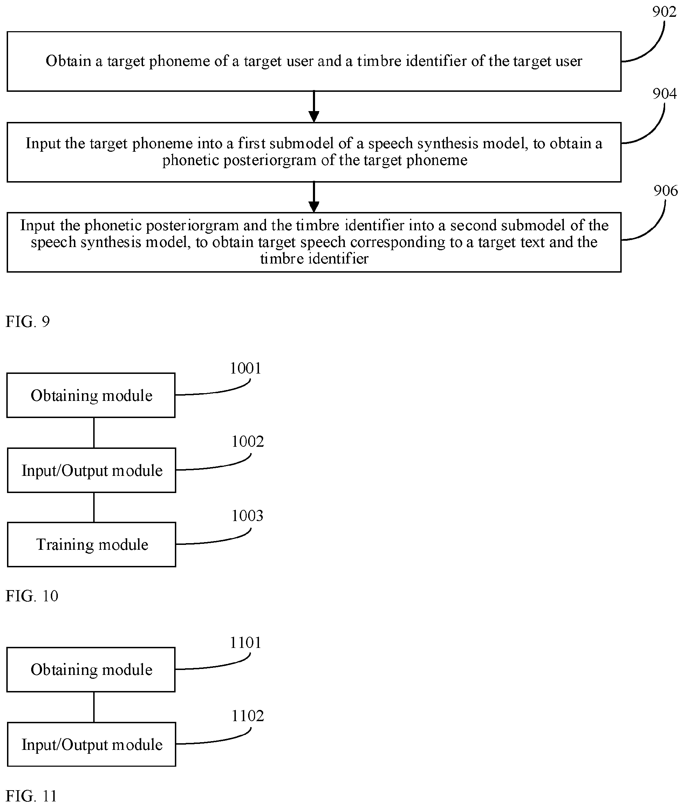

FIG. 9 is a schematic flowchart of a speech synthesis method according to an exemplary embodiment of the present disclosure. The method may be used on a computer device or on a client on a computer device. As shown in FIG. 9, this method includes:

Step 902: Obtain a target phoneme of a target user and a timbre identifier of the target user.

The target user is a user who needs to perform speech synthesis. A computer device may train a speech synthesis model through a sample phoneme of the target user and the timbre identifier of the target user. The sample phoneme is determined based on a sample text corresponding to sample speech of the target user. The target phoneme is determined based on a target text. The target text is the same as, partially the same as, or different from the sample text, and the target text is determined by a user by using the speech synthesis model.

The timbre identifier of the target user is configured for identifying information of the target user. When training the speech synthesis model, the timbre identifier may be configured for establishing a corresponding relationship between the model parameter learned by the model and the timbre identifier. Therefore, by inputting the timbre identifier into the model when synthesizing the speech, speech that conforms to the timbre corresponding to the timbre identifier may be synthesized.

**Step 904:** Input the target phoneme into a first submodel of the speech synthesis model, to obtain a phonetic posteriorgram of the target phoneme.

The speech synthesis model is deployed in the computer device or client, and the speech synthesis model is obtained by training through the training method for a speech synthesis model provided in embodiments of the present disclosure.

The phonetic posteriorgram is configured for reflecting a feature of each phoneme in the target phoneme and a pronunciation duration feature of each phoneme in the target phoneme. In all embodiments of the present disclosure, the computer device may extract a hidden layer feature of the target phoneme through the first submodel, predicts the pronunciation duration feature of each phoneme in the target phoneme through the duration predictor of the first submodel, and then may determine the predicted phonetic posteriorgram of the target phoneme according to the hidden layer feature of the target phoneme and the pronunciation duration feature of each phoneme in the target phoneme.

**Step 906:** Input the phonetic posteriorgram and the timbre identifier into a second submodel of the speech synthesis model, to obtain target speech corresponding to the target text and the timbre identifier.

Content of the target speech is the target text, and the timbre of the target speech is the timbre corresponding to the timbre identifier, namely, the timbre of the target user identified by the timbre identifier. The second submodel obtains the target speech based on the inverse Fourier transform of the intermediate variable by predicting the phonetic posteriorgram and the intermediate variable of the target speech. The intermediate variable is configured for reflecting a frequency domain feature of the target speech.

In all embodiments of the present disclosure, the computer device may further obtain the target style identifier. The computer device inputs the target phoneme and the target style identifier into the first submodel of the speech synthesis model, and obtains the phonetic posteriorgram of the target phoneme corresponding to the target style identifier and the target fundamental frequency feature corresponding to the target style identifier and the target phoneme. Then, the computer device inputs the phonetic posteriorgram, the timbre identifier, and the target fundamental frequency feature into the second submodel of the speech synthesis model, to obtain the target speech corresponding to the target text, the timbre identifier, and the target fundamental frequency feature.

In summary, in the method provided in all embodiments of the present disclosure, the speech synthesis model may generate target speech that matches a timbre of a target user according to a timbre identifier of the target user and a target text. A process of synthesizing the target speech is implemented by predicting an intermediate variable through a predicted phonetic posteriorgram and through inverse Fourier transform. Because the phonetic posteriorgram includes less information than a spectral feature, fewer model parameters are required by the predicted phonetic posteriorgram, and the inverse Fourier transform requires fewer model parameters than upsampling, which may reduce parameters of the model, thereby reducing computing resources consumed by the model, and implementing deployment of the model in a device with low computing resources.

Under the same model effect, the method provided in all embodiments of the present disclosure can greatly reduce a quantity of parameters and calculation amount of the model. This helps reduce usage of resources, including computing resources and storage resources, and makes it more convenient to deploy the resources in application scenarios such as an end side. In addition, the model reduces pronunciation errors compared with the related art, making the model more stable.

An experimental process and analysis are as follows:

An open data set is configured for performing pre-training on the model in all embodiments of the present disclosure and the model in the related art. The open data set includes about 242 hours of speech of 1151 speakers. To evaluate performance of the model in a speaker timbre cloning task, the pre-trained model is fine-tuned by using a multi-speaker corpus with different acoustic conditions. In actual operation, 5 males and 5 females are randomly selected as target speakers to perform timbre cloning. 20 sentences from each speaker are randomly selected. In addition, 10 additional sentences are randomly selected from each speaker, to obtain a total test set of 100 sentences from 10 speakers.

The speech synthesis model provided in all embodiments of the present disclosure is compared with a variational inference with adversarial learning for end-to-end text-to-speech (VITS) and Fastspeech+HiFiGAN configured for speech synthesis with adversarial learning. The VITS model uses a structure of the original paper. For Fastspeech+HiFiGAN, to compare and control a case under different quantities of parameters, two structures are used. A structure 1 is referred to as Fastspeech+HiFiGAN v1, and a structure 2 is referred to as Fastspeech+HiFiGAN v2. v1 uses the original paper structure Fastspeech and HiFiGAN v1. Compared with v1, v2 uses a smaller structure. v2 uses two layers of FFT in an encoder and a decoder, and a dimension of the hidden layer is set to 128. HiFiGAN uses the v2 version.

In the evaluation of objective indicators, each sentence test sample is evaluated by twenty listeners. Participants rate naturalness of the sample and similarity of the timbre of the speaker, with a maximum of 5 points and a minimum of 1 point. Computing complexity is measured by using giga floating-point operations per second (GFLOPS) as a unit. In addition, a word error rate (WER) of each system is measured, to test stability of each model, especially in terms of pronunciation and intonation. Test results are as shown in Table 1:

Table 1

| Model | Quantity of parameters (M) | Calculation amount (GFlops) | Naturalness | Timbre similarity | WER(%) |
|---|---|---|---|---|---|
| Fastspeech+HifiGAN v1 | 40.16 | 15.85 | 3.08 | 3.21 | 8.90 |

(continued)

| Model | Quantity of parameters (M) | Calculation amount (GFlops) | Naturalness | Timbre similarity | WER(%) |
|---|---|---|---|---|---|
| Fastspeech+HifiGAN v2 | 8.67 | 0.98 | 2.63 | 3.08 | 10.53 |
| VITS | 29.36 | 15.76 | 2.59 | 3.53 | 15.29 |
| Models in embodiments of the present disclosure | 8.97 | 0.72 | 2.94 | 3.10 | 8.19 |
| Original recording | - | - | 3.70 | 3.62 | 4.68 |

According to Table 1, it may be learnt that compared with Fastspeech+HifiGAN v2, which has a similar model size in embodiments of the present disclosure, the model in embodiments of the present disclosure implements better naturalness and less computing complexity. Compared with Fastspeech+HifiGAN v1, the model in embodiments of the present disclosure still has a gap in naturalness and speaker similarity, but implements better WER, and ensures the stability of the model.

An order of the steps in the method provided in all embodiments of the present disclosure may be properly adjusted, a step may also be correspondingly added or omitted according to a condition, and variations readily figured out by a person skilled in the art within the technical scope disclosed in the present disclosure shall fall within the protection scope of the present disclosure. Therefore, details are not described again.

An example in which a scenario in which the method provided in embodiments of the present disclosure is applied to production of a speech packet of a user in an AI broadcast service as an example is used. For example, the method is applied to production of a speech packet for map navigation. The computer device obtains a target phoneme of a target text of a target user, a timbre identifier of the target user, and a target style identifier. The target user is the user or a celebrity, and the like, and the target text includes a text of speech broadcast of a map navigation scenario. The target style identifier is an identifier of a style corresponding to the speech broadcast of map navigation. For example, the style is slow pronunciation and accurate fundamental frequency when reading phonemes. By inputting the target phoneme and the target style identifier into the first submodel, the computer device may obtain the phonetic posteriorgram of the target phoneme corresponding to the target style identifier and the target fundamental frequency feature corresponding to the target style identifier and the target phoneme. Then, the phonetic posteriorgram, the timbre identifier, and the target fundamental frequency feature are input into the second submodel, thereby obtaining the target speech corresponding to the target text, the timbre identifier, and the target style identifier. The target text determines pronunciation content of the target speech. In other words, the pronunciation content of the target speech is the text of the speech broadcast in the map navigation scenario. The timbre identifier determines the timbre of the target speech, that is, the timbre of the target user selected by the user. The target style identifier determines a pronunciation style of the target speech, including pronunciation duration and a fundamental frequency of each phoneme. The speech synthesis model is obtained by performing timbre cloning and fine-tuning on the sample speech and the timbre identifier of the target user. The content of the sample speech is different from the content of the target text. For example, the sample speech is obtained by recording reading speech of the target user for a small quantity of texts, and the target text may include a large quantity of texts that are different from the small quantity of texts. In this way, speech for other texts that matches the timbre of the user is synthesized according to the recorded speech of the user for the small quantity of texts.

FIG. 10 is a schematic diagram of a structure of a training apparatus for a speech synthesis model according to an exemplary embodiment of the present disclosure. As shown in FIG. 10, the apparatus includes:

an obtaining module 1001, configured to obtain a sample phoneme of a target user and a timbre identifier of the target user, the sample phoneme being determined based on a sample text corresponding to sample speech of the target user, and the timbre identifier being configured for identifying a timbre of the target user;

an input/output module 1002, configured to input the sample phoneme into a first submodel of the speech synthesis model, to obtain a predicted phonetic posteriorgram of the sample phoneme, the predicted phonetic posteriorgram being configured for reflecting a feature of each phoneme in the sample phoneme and a pronunciation duration feature of each phoneme in the sample phoneme;

the input/output module 1002, being further configured to input the predicted phonetic posteriorgram and the timbre identifier into a second submodel of the speech synthesis model, to obtain predicted speech corresponding to the sample text and the timbre identifier, the second submodel obtaining the predicted speech by predicting the predicted phonetic posteriorgram and a predicted intermediate variable of the predicted speech, and the predicted intermediate variable being configured for reflecting a frequency domain feature of the predicted speech;

a training module 1003, configured to train the first submodel according to the predicted phonetic posteriorgram; and train the second submodel according to the predicted speech and the predicted intermediate variable.

In an optional design, the second submodel includes a prior encoder and a decoder; and the input/output module 1002 is configured to:

input the predicted phonetic posteriorgram and the timbre identifier into the prior encoder, to obtain the predicted intermediate variable; and

perform an inverse Fourier transform on the predicted intermediate variable through the decoder, to obtain the predicted speech.

In an optional design, the prior encoder includes a phonetic posterior encoder; and the input/output module 1002 is configured to:
input the predicted phonetic posteriorgram and the timbre identifier into the phonetic posterior encoder, and sample an average value and a variance of prior distribution of the predicted intermediate variable, to obtain the predicted intermediate variable.

In an optional design, the second submodel further includes a posterior encoder. The obtaining module 1001 is configured to:

obtain the sample speech;

the input/output module 1002 is configured to:

input the sample speech into the posterior encoder, to obtain a real intermediate variable; and

the training module 1003 is configured to:
calculate a relative entropy loss between the predicted intermediate variable and the real intermediate variable, to train the second submodel.

In an optional design, the posterior encoder includes a posterior predictor; and the input/output module 1002 is configured to:
input the sample speech into the posterior predictor, and sample an average value and a variance of posterior distribution of the real intermediate variable, to obtain the real intermediate variable.

In an optional design, the prior encoder further includes a regularized flow layer; and the input/output module 1002 is configured to:

perform affine coupling processing on the real intermediate variable through the regularized flow layer, to obtain the processed real intermediate variable; and

the training module 1003 is configured to:
calculate a relative entropy loss between the predicted intermediate variable and the processed real intermediate variable, to train the second submodel.

In an optional design, the regularized flow layer includes a plurality of affine coupling layers, and each affine coupling layer is configured for performing affine coupling processing on the real intermediate variable; and different affine coupling layers share model parameters, and each affine coupling layer corresponds to an embedded layer identifier.

In an optional design, the prior encoder further includes a phonetic posterior predictor, and the phonetic posterior predictor is configured to predict, in a process of pre-training the second submodel, a predicted phonetic posteriorgram in the pre-training process according to a predicted intermediate variable in the pre-training process.

In an optional design, the training module 1003 is configured to:
in the pre-training process of the second submodel, calculate a loss function between the predicted phonetic posteriorgram in the pre-training process and a real phonetic posteriorgram in the pre-training process, to train the second submodel.

In an optional design, the obtaining module 1001 is configured to:

obtain a fundamental frequency feature corresponding to the sample phoneme and a style identifier, where the fundamental frequency feature is obtained by performing feature extraction on the sample phoneme through the first submodel based on the style identifier, and the style identifier is configured for identifying a speech style; and

the input/output module 1002 is configured to:
input the predicted phonetic posteriorgram, the timbre identifier, and the fundamental frequency feature into the prior encoder, to obtain the predicted intermediate variable corresponding to the style identifier.

In an optional design, the decoder includes an inverse Fourier transform decoder; and the input/output module 1002 is configured to:
perform inverse Fourier transform on the predicted intermediate variable through the inverse Fourier transform decoder, to obtain the predicted speech.

In an optional design, the input/output module 1002 is configured to:
perform an inverse Fourier transform on the predicted intermediate variable through the inverse Fourier transform decoder according to the style identifier, to obtain the predicted speech.

In an optional design, the inverse Fourier transform decoder includes a plurality of one-dimensional convolutional layers, and the last one-dimensional convolutional layer is connected to an inverse Fourier transform layer.

In an optional design, the obtaining module 1001 is configured to:

obtain the sample speech;

the training module 1003 is configured to:
calculate a Mel spectrum loss between the predicted speech and the sample speech, to train the second submodel.

In an optional design, the decoder further includes a discriminator, and the discriminator forms a generative adversarial network with parts of the speech synthesis model other than the discriminator; and the input/output module 1002 is configured to:

input the predicted speech into the discriminator, to obtain a discrimination result of the predicted speech, where the discrimination result is configured for reflecting that the predicted speech is real information or predicted information; and

the training module 1003 is configured to:
determine a generative adversarial loss according to the discrimination result and a real source of the predicted speech, to train the generative adversarial network.

In an optional design, the discriminator includes a multi-scale spectral discriminator; and the input/output module 1002 is configured to:

input the predicted speech into the multi-scale spectrum discriminator, perform short-time Fourier transform on the predicted speech on an amplitude spectrum through a plurality of sub-discriminators of the multi-scale spectrum discriminator, and perform two-dimensional convolution processing through a plurality of two-dimensional convolutional layers, to obtain a discrimination result of the predicted speech, where

each sub-discriminator has different short-time Fourier transform parameters.

In an optional design, the discriminator includes a multi-scale complex spectral discriminator; and the input/output module 1002 is configured to:

input the predicted speech into the multi-scale complex spectrum discriminator, perform short-time Fourier transform on the predicted speech on a complex spectrum through a plurality of sub-discriminators of the multi-scale complex spectrum discriminator, and perform two-dimensional complex convolution processing through a plurality of two-dimensional complex convolutional layers, to obtain a discrimination result of the predicted speech, where

each sub-discriminator has different short-time Fourier transform parameters.

In an optional design, the first submodel includes a text encoder, a duration regulation device, and a post-processing network. The obtaining module 1001 is configured to:

obtain a real pronunciation duration feature corresponding to each phoneme in the sample phoneme; and

the input/output module 1002 is configured to:

perform encoding on the sample phoneme through the text encoder, to obtain a hidden layer feature of the sample phoneme;

perform frame expansion processing on the hidden layer feature of the sample phoneme through the duration regulation device according to the real pronunciation duration feature corresponding to each phoneme in the sample phoneme; and

perform convolution processing on the hidden layer feature of the sample phoneme obtained after frame expansion through the post-processing network, to obtain the predicted phonetic posteriorgram of the sample phoneme.

In an optional design, the obtaining module 1001 is configured to:

obtain a real phonetic posteriorgram of the sample phoneme;

the training module 1003 is configured to:
calculate a loss function between the predicted phonetic posteriorgram and the real phonetic posteriorgram, train the first submodel, where after the training is completed, the real pronunciation duration feature configured for being input into the duration regulation device is replaced with the predicted pronunciation duration feature obtained by the duration predictor.

In an optional design, the first submodel further includes a duration predictor, and the input/output module 1002 is configured to:

predict the hidden layer feature of the sample phoneme through the duration predictor, to obtain a predicted pronunciation duration feature corresponding to each phoneme in the sample phoneme; and

the training module 1003 is configured to:
calculate a loss function between the predicted pronunciation duration feature and the real pronunciation duration feature, and train the first submodel.

In an optional design, the obtaining module 1001 is configured to:

obtain the style identifier; and

the input/output module 1002 is configured to:
perform encoding on the sample phoneme through the text encoder according to the style identifier, to obtain the hidden layer feature of the sample phoneme corresponding to the style identifier.

In an optional design, the first submodel further includes a fundamental frequency predictor; and the input/output module 1002 is configured to:
predict the hidden layer feature of the sample phoneme through the fundamental frequency predictor, to obtain the fundamental frequency feature corresponding to the style identifier and the sample phoneme, where the fundamental frequency feature is configured for being input into the second submodel, to obtain the predicted speech corresponding to the style identifier.

FIG. 11 is a schematic diagram of a structure of a speech synthesis apparatus according to an exemplary embodiment of the present disclosure. The apparatus includes the speech synthesis model obtained by training through the apparatus as shown in FIG. 10. As shown in FIG. 11, the apparatus includes:

an obtaining module 1101, configured to obtain a target phoneme of a target user and a timbre identifier of the target user, the target phoneme being determined based on a target text, and the timbre identifier is configured for identifying a timbre of the target user;

an input/output module 1102, configured to input the target phoneme into a first submodel of the speech synthesis model, to obtain a phonetic posteriorgram of the target phoneme; and

the input/output module 1102, being further configured to input the phonetic posteriorgram and the timbre identifier into a second submodel of the speech synthesis model, to obtain target speech corresponding to the target text and the timbre identifier.

In an optional design, the obtaining module 1101 is configured to:

obtain a target style identifier, where the target style identifier is configured for identifying a speech style of the target speech; and

the input/output module 1102 is configured to:

input the target phoneme and the target style identifier into the first submodel of the speech synthesis model, and obtain the phonetic posteriorgram of the target phoneme corresponding to the target style identifier and the target fundamental frequency feature corresponding to the target style identifier and the target phoneme; and

input the phonetic posteriorgram, the timbre identifier, and the target fundamental frequency feature into the second submodel of the speech synthesis model, to obtain the target speech corresponding to the target text, the timbre identifier, and the target fundamental frequency feature.

The training apparatus for a speech synthesis model provided in the foregoing embodiments is illustrated with an example of division of the foregoing functional modules. In actual application, the foregoing functions may be assigned to and completed by different function modules as required. That is, an internal structure of the device may be divided into different function modules, to complete all or some of the functions described above. In addition, the training apparatus for a speech synthesis model and the training method for a speech synthesis model embodiments provided in the foregoing embodiments belong to one conception. For the specific implementation process, refer to the method embodiments, and details are not described herein again.

Similarly, according to the speech synthesis apparatus in the foregoing embodiments, only division of the functional modules is illustrated. In actual application, the functions may be assigned to different functional modules for completion as required. In other words, an internal structure of the device is divided into different functional modules to complete all or a part of the functions described above. In addition, the speech synthesis apparatus and the speech synthesis method embodiments provided in the foregoing embodiments belong to one conception. For the specific implementation process, refer to the method embodiments, and details are not described herein again.

Embodiments of the present disclosure further provide a computer device, the computer device including a processor and a memory, the memory storing at least one instruction, at least one segment of program, a code set, or an instruction set, the at least one instruction, the at least one segment of program, the code set, or the instruction set being loaded and executed by the processor to implement the training method for a speech synthesis model or the speech synthesis method provided in the foregoing method embodiments.

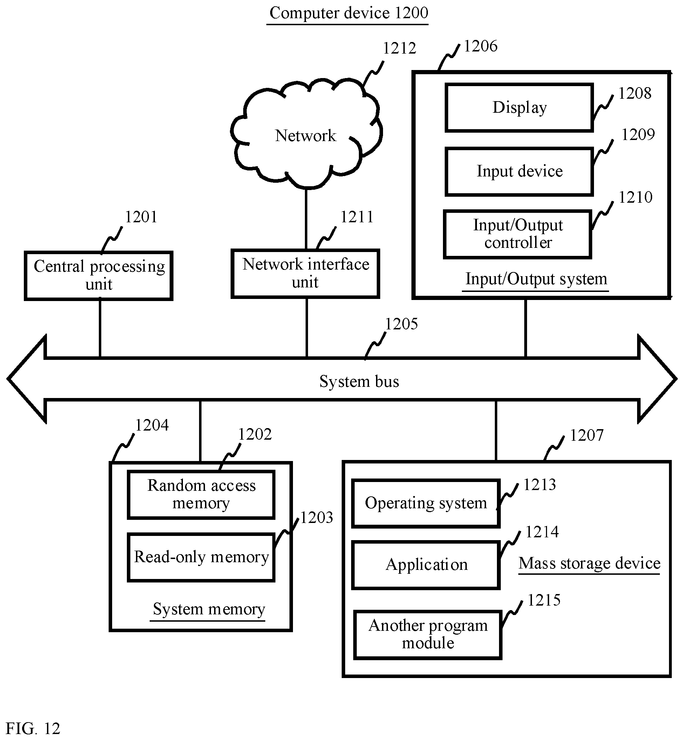

In all embodiments of the present disclosure, the computer device may be a server. For example, FIG. 12 is a schematic diagram of a structure of a computer device according to an exemplary embodiment of the present disclosure.

The computer device 1200 includes a central processing unit (CPU) 1201, a system memory 1204 including a random access memory (RAM) 1202 and a read-only memory (ROM) 1203, and a system bus 1205 connecting the system memory 1204 to the CPU 1201. The computer device 1200 further includes a basic input/output system (I/O system) 1206 configured to transmit information between components in the computer device, and a mass storage device 1207 configured to store an operating system 1213, an application 1214, and another program module 1215.

The basic I/O system 1206 includes a display 1208 configured to display information and an input device 1209 such as a mouse or a keyboard that is configured to allow a user to input information. The display 1208 and the input device 1209 are connected to an I/O controller 1210 of the system bus 1205, to be connected to the CPU 1201. The basic I/O system 1206 may further include the input and output controller 1210 to be configured to receive and process inputs from a plurality of other devices such as a keyboard, a mouse, and an electronic stylus. Similarly, the input/output controller 1210 further provides an output to a display screen, a printer, or another type of output device.

The mass storage device 1207 is connected to the CPU 1201 by using a mass storage controller (not shown) connected to the system bus 1205. The mass storage device 1207 and an associated computer-readable storage medium thereof provide non-volatile storage for the computer device 1200. In other words, the mass storage device 1207 may include a computer-readable storage medium (not shown) such as a hard disk or a compact disc read-only memory (CD-ROM) drive.

Without loss of generality, the computer-readable storage medium may include a computer storage medium and a communication medium. The computer storage medium includes volatile and non-volatile media, and removable and non-removable media implemented by using any method or technology and configured to store information such as a computer-readable storage instruction, a data structure, a program module, or other data. The computer storage medium includes a RAM, a ROM, an erasable programmable ROM (EPROM), an electrically-erasable programmable ROM (EEPROM), a flash memory or another solid-state memory technology, a CD-ROM, a digital versatile disc (DVD) or another optical memory, a magnetic cassette, a magnetic tape, a magnetic disk memory, or another magnetic storage device. Certainly, a person skilled in the art may learn that the computer storage medium is not limited to the above. The system memory 1204 and the mass storage device 1207 may be collectively referred to as a memory.

The memory stores one or more programs, and the one or more programs are configured to be executed by one or more CPUs 1201. The one or more programs include instructions used for implementing the foregoing method embodiments, and the CPU 1201 executes the one or more programs to implement the method provided in the foregoing method embodiments.

According to the various embodiments of the present disclosure, the computer device 1200 may further be connected, through a network such as the Internet, to a remote computer device on the network for running. That is, the computer device 1200 may be connected to a network 1212 by using a network interface unit 1211 connected to the system bus 1205, or may be connected to another type of network or a remote computer device system (not shown) by using a network interface unit 1211.

The memory further includes one or more programs. The one or more programs are stored in the memory and include steps to be executed by the computer device in the method provided in embodiments of the present disclosure.

Embodiments of the present disclosure further provide a computer-readable storage medium, storing at least one instruction, at least one program, a code set or an instruction set, the at least one instruction, the at least one program, the code set, or the instruction set being loaded and executed by a processor of an electronic device, to implement the training method for a speech synthesis model or a speech synthesis method provided in the foregoing method embodiments.

The present disclosure further provides a computer program product, including a computer program, and the computer program product, when run on a computer, causes the computer device to perform the training method for a speech synthesis model or a speech synthesis method.

A person of ordinary skill in the art may understand that all or some of the steps of the foregoing embodiments may be implemented by hardware, or may be implemented by a program instructing relevant hardware. The program may be stored in a computer-readable storage medium. The storage medium may be a read-only memory, a magnetic disk, an optical disc, or the like.

The foregoing descriptions are merely optional embodiments of the present disclosure, but are not intended to limit the present disclosure. Any modification, equivalent replacement, or improvement made within the scope of the appended claims.

**Claims**

**1.** A method for training a speech synthesis model, executable by a computer device, the method comprising:

obtaining (202) a sample phoneme of a user and a timbre identifier of the user, the sample phoneme being determined based on a sample text corresponding to a sample speech of the user, and the timbre identifier being configured to identify a timbre of the user;

inputting (204) the sample phoneme into a first submodel of the speech synthesis model, to obtain a predicted phonetic posterior feature of the sample phoneme, the predicted phonetic posterior feature being configured to indicate a feature of each phoneme in the sample phoneme and a pronunciation duration feature of each phoneme in the sample phoneme;

inputting (206) the predicted phonetic posterior feature and the timbre identifier into a second submodel of the speech synthesis model, to obtain predicted speech corresponding to the sample text and the timbre identifier, wherein the predicted phonetic posterior feature is inputted to the second submodel to obtain a predicted intermediate variable, and the predicted speech is obtained based on the predicted intermediate variable, and the predicted intermediate variable being configured to indicate a frequency domain feature of the predicted speech;

training (208) the first submodel according to the predicted phonetic posterior feature; and training the second submodel according to the predicted speech and the predicted intermediate variable,

**characterized in that**, the second submodel comprises a prior encoder and a decoder; and wherein the inputting the predicted phonetic posterior feature and the timbre identifier into a second submodel of the speech synthesis model, to obtain predicted speech corresponding to the sample text and the timbre identifier comprises:

inputting the predicted phonetic posterior feature and the timbre identifier into the prior encoder, to obtain the predicted intermediate variable; and

performing inverse Fourier transform on the predicted intermediate variable through the decoder, to obtain the predicted speech,

wherein the decoder comprises an inverse Fourier transform structure and an upsampling structure; and the performing inverse Fourier transform on the predicted intermediate variable through the decoder, to obtain the predicted speech comprises:

obtaining the predicted speech by restoring a low-frequency part of the predicted speech through the upsampling structure and modeling a medium-high frequency part of the predicted speech through the inverse Fourier transform structure.

2. The method according to claim 1, wherein the prior encoder comprises a phonetic posterior encoder; and wherein the inputting the predicted phonetic posterior feature and the timbre identifier into the prior encoder, to obtain the predicted intermediate variable comprises:

inputting the predicted phonetic posterior feature and the timbre identifier into the phonetic posterior encoder, and calculating an average value and a variance of prior distribution of the predicted intermediate variable, to obtain the predicted intermediate variable.

3. The method according to claim 1, wherein the second submodel further comprises a posterior encoder; and wherein the training the second submodel according to the predicted intermediate variable comprises:

obtaining the sample speech;

inputting the sample speech into the posterior encoder, to obtain a real intermediate variable; and

calculating a relative entropy loss between the predicted intermediate variable and the real intermediate variable, to train the second submodel.

4. The method according to claim 3, wherein the posterior encoder comprises a posterior predictor; and wherein the inputting the sample speech into the posterior encoder, to obtain a real intermediate variable comprises:

inputting the sample speech into the posterior predictor, and calculating an average value and a variance of posterior distribution of the real intermediate variable, to obtain the real intermediate variable.

5. The method according to claim 1, wherein the prior encoder further comprises a phonetic posterior predictor, and the phonetic posterior predictor is configured to output, in a process of pre-training the second submodel, a predicted phonetic posterior feature according to a predicted intermediate variable in the pre-training process; and wherein the method further comprises:

in the pre-training process of the second submodel, calculating a loss function between the predicted phonetic posterior feature and a real phonetic posterior feature in the pre-training process, to train the second submodel.

6. The method according to claim 1, further comprising:

obtaining a fundamental frequency feature corresponding to the sample phoneme and a style identifier, wherein the fundamental frequency feature is obtained by extracting features of the sample phoneme through the first submodel based on the style identifier, and the style identifier indicates a speech style;

wherein the inputting the predicted phonetic posterior feature and the timbre identifier into the prior encoder, to obtain the predicted intermediate variable comprises:

inputting the predicted phonetic posterior feature, the timbre identifier, and the fundamental frequency feature into the prior encoder, to obtain the predicted intermediate variable corresponding to the style identifier.

7. The method according to claim 1, wherein the inverse Fourier transform structure comprises a plurality of one-dimensional convolutional layers, and a last one-dimensional convolutional layer of the plurality of one-dimensional convolutional layers is connected to an inverse Fourier transform layer.

8. The method according to any one of claims 1 to 7, wherein the decoder further comprises a discriminator, and the discriminator and parts of the speech synthesis model other than the discriminator form a generative adversarial network; and wherein the method further comprises:

inputting the predicted speech into the discriminator, to obtain a discrimination result of the predicted speech, wherein the discrimination result is configured to indicate that the predicted speech is real information or predicted information; and

determining a generative adversarial loss according to the discrimination result and a real source of the predicted speech, to train the generative adversarial network.

9. The method according to any one of claims 1 to 7, wherein the first submodel comprises a text encoder, a duration regulation device, and a post-processing network;

wherein the inputting the sample phoneme into a first submodel of the speech synthesis model, to obtain a predicted phonetic posterior feature of the sample phoneme comprises:

obtaining a real pronunciation duration feature corresponding to each phoneme in the sample phoneme;

performing encoding on the sample phoneme through the text encoder, to obtain a hidden layer feature of the sample phoneme;

performing frame expansion on the hidden layer feature of the sample phoneme through the duration regulation device according to the real pronunciation duration feature corresponding to each phoneme in the sample phoneme; and

performing convolution processing on the hidden layer feature of the sample phoneme subjected to frame expansion through the post-processing network, to obtain the predicted phonetic posterior feature of the sample phoneme.

10. The method according to claim 9, wherein the first submodel further comprises a duration predictor, and the method further comprises:

predicting the hidden layer feature of the sample phoneme through the duration predictor, to obtain a predicted pronunciation duration feature corresponding to each phoneme in the sample phoneme; and

calculating a loss between the predicted pronunciation duration feature and the real pronunciation duration feature, to train the first submodel, wherein after the training is completed, the real pronunciation duration feature inputted into the duration regulation device is replaced with the predicted pronunciation duration feature obtained by the duration predictor.

11. The method according to claim 9, further comprising:

obtaining a style identifier;

wherein the performing encoding on the sample phoneme through the text encoder, to obtain a hidden layer feature of the sample phoneme comprises:

performing encoding on the sample phoneme through the text encoder according to the style identifier, to obtain the hidden layer feature of the sample phoneme corresponding to the style identifier.

12. The method according to claim 11, wherein the first submodel further comprises a fundamental frequency predictor; and wherein the method further comprises:

predicting the hidden layer feature of the sample phoneme through the fundamental frequency predictor, to obtain the fundamental frequency feature corresponding to the style identifier and the sample phoneme, wherein the fundamental frequency feature is inputted into the second submodel, to obtain the predicted speech corresponding to the style identifier.

13. A speech synthesis method, executable by a computer device, **characterized in that**, the computer device comprises the speech synthesis model obtained through training by performing the method according to any one of claims 1 to 12, and the method comprising:

obtaining (902) a phoneme of a user and a timbre identifier of the user, the phoneme being determined based on a text, and the timbre identifier being configured to indicate a timbre of the user;

inputting (904) the phoneme into the first submodel of the speech synthesis model, to obtain a phonetic posterior feature of the phoneme; and

inputting (906) the phonetic posterior feature and the timbre identifier into the second submodel of the speech synthesis model, to obtain speech corresponding to the text and the timbre identifier.

**EP 4 447 040 B1**

**Patentansprüche**

1. Verfahren zum Trainieren eines Sprachsynthesemodells, ausführbar durch eine Computervorrichtung, wobei das Verfahren umfasst:

   Erhalten (202) eines Beispielphonems eines Benutzers und eines Klangfarbenbezeichners des Benutzers, wobei das Beispielphonem basierend auf einem Beispieltext bestimmt wird, der einer Beispielsprache des Benutzers entspricht, und wobei der Klangfarbenbezeichner dazu konfiguriert ist, eine Klangfarbe des Benutzers zu identifizieren;

   Eingeben (204) des Beispielphonems in ein erstes Teilmodell des Sprachsynthesemodells, um ein vorhergesagtes phonetisches Posterior-Merkmal des Beispielphonems zu erhalten, wobei das vorhergesagte phonetische Posterior-Merkmal dazu konfiguriert ist, ein Merkmal jedes Phonems in dem Beispielphonem und ein Aussprachedauermerkmal jedes Phonems in dem Beispielphonem anzuzeigen;

   Eingeben (206) des vorhergesagten phonetischen Posterior-Merkmals und des Klangfarbenbezeichners in ein zweites Teilmodell des Sprachsynthesemodells, um eine vorhergesagte Sprache zu erhalten, die dem Beispieltext und dem Klangfarbenbezeichner entspricht, wobei das vorhergesagte phonetische Posterior-Merkmal in das zweite Teilmodell eingegeben wird, um eine vorhergesagte Zwischenvariable zu erhalten, und die vorhergesagte Sprache basierend auf der vorhergesagten Zwischenvariable erhalten wird, und wobei die vorhergesagte Zwischenvariable dazu konfiguriert ist, ein Frequenzbereichsmerkmal der vorhergesagten Sprache anzuzeigen;

   Trainieren (208) des ersten Teilmodells gemäß dem vorhergesagten phonetischen Posterior-Merkmal; und Trainieren des zweiten Teilmodells gemäß der vorhergesagten Sprache und der vorhergesagten Zwischenvariable,

   **dadurch gekennzeichnet, dass** das zweite Teilmodell einen Prior-Enkoder und einen Dekoder umfasst; und wobei das Eingeben des vorhergesagten phonetischen Posterior-Merkmals und des Klangfarbenbezeichners in ein zweites Teilmodell des Sprachsynthesemodells, um eine vorhergesagte Sprache zu erhalten, die dem Beispieltext und dem Klangfarbenbezeichner entspricht, umfasst:

   Eingeben des vorhergesagten phonetischen Posterior-Merkmals und des Klangfarbenbezeichners in den Prior-Enkoder, um die vorhergesagte Zwischenvariable zu erhalten; und

   Durchführen einer inversen Fourier-Transformation an der vorhergesagten Zwischenvariable durch den Dekoder, um die vorhergesagte Sprache zu erhalten,

   wobei der Dekoder eine inverse Fourier-Transformationsstruktur und eine Upsampling-Struktur umfasst; und das Durchführen einer inversen Fourier-Transformation an der vorhergesagten Zwischenvariable durch den Dekoder, um die vorhergesagte Sprache zu erhalten, umfasst:

   Erhalten der vorhergesagten Sprache durch Wiederherstellen eines Niederfrequenzanteils der vorhergesagten Sprache durch die Upsampling-Struktur und Modellieren eines Mittel-Hochfrequenzanteils der vorhergesagten Sprache durch die inverse Fourier-Transformationsstruktur.

2. Verfahren nach Anspruch 1, wobei der Prior-Enkoder einen phonetischen Posterior-Enkoder umfasst; und wobei das Eingeben des vorhergesagten phonetischen Posterior-Merkmals und des Klangfarbenbezeichners in den Prior-Enkoder, um die vorhergesagte Zwischenvariable zu erhalten, umfasst:
   Eingeben des vorhergesagten phonetischen Posterior-Merkmals und des Klangfarbenbezeichners in den phonetischen Posterior-Enkoder und Berechnen eines Mittelwerts und einer Varianz der Prior-Verteilung der vorhergesagten Zwischenvariable, um die vorhergesagte Zwischenvariable zu erhalten.

3. Verfahren nach Anspruch 1, wobei das zweite Teilmodell ferner einen Posterior-Enkoder umfasst; und wobei das Trainieren des zweiten Teilmodells gemäß der vorhergesagten Zwischenvariable umfasst:

   Erhalten der Beispielsprache;
   Eingeben der Beispielsprache in den Posterior-Enkoder, um eine reale Zwischenvariable zu erhalten; und
   Berechnen eines relativen Entropieverlusts zwischen der vorhergesagten Zwischenvariable und der realen Zwischenvariable, um das zweite Teilmodell zu trainieren.

4. Verfahren nach Anspruch 3, wobei der Posterior-Enkoder einen Posterior-Prädiktor umfasst; und wobei das Eingeben der Beispielsprache in den Posterior-Enkoder, um eine reale Zwischenvariable zu erhalten, umfasst:
   Eingeben der Beispielsprache in den Posterior-Prädiktor und Berechnen eines Mittelwerts und einer Varianz der Posterior-Verteilung der realen Zwischenvariable, um die reale Zwischenvariable zu erhalten.

5. Verfahren nach Anspruch 1, wobei der Prior-Enkoder ferner einen phonetischen Posterior-Prädiktor umfasst, und der phonetische Posterior-Prädiktor dazu konfiguriert ist, in einem Prozess des Vortrainierens des zweiten Teilmodells ein vorhergesagtes phonetisches Posterior-Merkmal gemäß einer vorhergesagten Zwischenvariable in dem Vortrainierensprozess auszugeben; und wobei das Verfahren ferner umfasst:

in dem Vortrainierensprozess des zweiten Teilmodells, Berechnen einer Verlustfunktion zwischen dem vorhergesagten phonetischen Posterior-Merkmal und einem realen phonetischen Posterior-Merkmal in dem Vortrainierensprozess, um das zweite Teilmodell zu trainieren.

6. Verfahren nach Anspruch 1, ferner umfassend:

Erhalten eines Grundfrequenzmerkmals, das dem Beispielphonem entspricht, und eines Stilbezeichners, wobei das Grundfrequenzmerkmal durch Extrahieren von Merkmalen des Beispielphonems durch das erste Teilmodell basierend auf dem Stilbezeichner erhalten wird, und der Stilbezeichner einen Sprachstil anzeigt;
wobei das Eingeben des vorhergesagten phonetischen Posterior-Merkmals und des Klangfarbenbezeichners in den Prior-Enkoder, um die vorhergesagte Zwischenvariable zu erhalten, umfasst:
Eingeben des vorhergesagten phonetischen Posterior-Merkmals, des Klangfarbenbezeichners und des Grundfrequenzmerkmals in den Prior-Enkoder, um die vorhergesagte Zwischenvariable zu erhalten, die dem Stilbezeichner entspricht.

7. Verfahren nach Anspruch 1, wobei die inverse Fourier-Transformationsstruktur eine Vielzahl von eindimensionalen Faltungsschichten umfasst, und eine letzte eindimensionale Faltungsschicht der Vielzahl von eindimensionalen Faltungsschichten mit einer inversen Fourier-Transformationsschicht verbunden ist.

8. Verfahren nach einem der Ansprüche 1 bis 7, wobei der Dekoder ferner einen Diskriminator umfasst, und der Diskriminator und Teile des Sprachsynthesemodells, die nicht den Diskriminator umfassen, ein generatives adversariales Netzwerk bilden; und wobei das Verfahren ferner umfasst:

Eingeben der vorhergesagten Sprache in den Diskriminator, um ein Diskriminierungsergebnis der vorhergesagten Sprache zu erhalten, wobei das Diskriminierungsergebnis dazu konfiguriert ist, anzuzeigen, dass die vorhergesagte Sprache reale Information oder vorhergesagte Information ist; und
Bestimmen eines generativen adversarialen Verlusts gemäß dem Diskriminierungsergebnis und einer realen Quelle der vorhergesagten Sprache, um das generative adversariale Netzwerk zu trainieren.

9. Verfahren nach einem der Ansprüche 1 bis 7, wobei das erste Teilmodell einen Textenkoder, eine Dauerregulierungsvorrichtung und ein Nachverarbeitungsnetzwerk umfasst;
wobei das Eingeben des Beispielphonems in ein erstes Teilmodell des Sprachsynthesemodells, um ein vorhergesagtes phonetisches Posterior-Merkmal des Beispielphonems zu erhalten, umfasst:

Erhalten eines realen Aussprachedauermerkmals, das jedem Phonem in dem Beispielphonem entspricht;
Durchführen einer Kodierung des Beispielphonems durch den Textenkoder, um ein Hidden-Layer-Merkmal des Beispielphonems zu erhalten;
Durchführen einer Frame-Erweiterung des Hidden-Layer-Merkmals des Beispielphonems durch die Dauerregulierungsvorrichtung gemäß dem realen Aussprachedauermerkmal, das jedem Phonem in dem Beispielphonem entspricht; und
Durchführen einer Faltungsverarbeitung des Hidden-Layer-Merkmals des der Frame-Erweiterung unterzogenen Beispielphonems durch das Nachverarbeitungsnetzwerk, um das vorhergesagte phonetische Posterior-Merkmal des Beispielphonems zu erhalten.

10. Verfahren nach Anspruch 9, wobei das erste Teilmodell ferner einen Dauerprädiktor umfasst, und das Verfahren ferner umfasst:

Vorhersagen des Hidden-Layer-Merkmals des Beispielphonems durch den Dauerprädiktor, um ein vorhergesagtes Aussprachedauermerkmal zu erhalten, das jedem Phonem in dem Beispielphonem entspricht; und
Berechnen eines Verlusts zwischen dem vorhergesagten Aussprachedauermerkmal und dem realen Aussprachedauermerkmal, um das erste Teilmodell zu trainieren, wobei nach Abschluss des Trainierens das in die Dauerregulierungsvorrichtung eingegebene reale Aussprachedauermerkmal durch das vom Dauerprädiktor erhaltene vorhergesagte Aussprachedauermerkmal ersetzt wird.

**11.** Verfahren nach Anspruch 9, ferner umfassend:

Erhalten eines Stilbezeichners;
wobei das Durchführen einer Kodierung des Beispielphonems durch den Textenkoder, um ein Hidden-Layer-Merkmal des Beispielphonems zu erhalten, umfasst:
Durchführen einer Kodierung des Beispielphonems durch den Textenkoder gemäß dem Stilbezeichner, um das Hidden-Layer-Merkmal des Beispielphonems zu erhalten, das dem Stilbezeichner entspricht.

**12.** Verfahren nach Anspruch 11, wobei das erste Teilmodell ferner einen Grundfrequenzprädiktor umfasst; und wobei das Verfahren ferner umfasst:
Vorhersagen des Hidden-Layer-Merkmals des Beispielphonems durch den Grundfrequenzprädiktor, um das Grundfrequenzmerkmal zu erhalten, das dem Stilbezeichner und dem Beispielphonem entspricht, wobei das Grundfrequenzmerkmal in das zweite Teilmodell eingegeben wird, um die vorhergesagte Sprache zu erhalten, die dem Stilbezeichner entspricht.

**13.** Sprachsyntheseverfahren, ausführbar durch eine Computervorrichtung, **dadurch gekennzeichnet, dass** die Computervorrichtung das Sprachsynthesemodell umfasst, das durch Durchführen des Verfahrens nach einem der Ansprüche 1 bis 12 trainiert wurde, und das Verfahren umfasst:

Erhalten (902) eines Phonems eines Benutzers und eines Klangfarbenbezeichners des Benutzers, wobei das Phonem basierend auf einem Text bestimmt wird, und der Klangfarbenbezeichner dazu konfiguriert ist, eine Klangfarbe des Benutzers anzuzeigen;
Eingeben (904) des Phonems in das erste Teilmodell des Sprachsynthesemodells, um ein phonetisches Posterior-Merkmal des Phonems zu erhalten; und
Eingeben (906) des phonetischen Posterior-Merkmals und des Klangfarbenbezeichners in das zweite Teilmodell des Sprachsynthesemodells, um eine Sprache zu erhalten, die dem Text und dem Klangfarbenbezeichner entspricht.

## Revendications

**1.** Procédé d'entraînement d'un modèle de synthèse vocale, exécutable par un dispositif informatique, le procédé comprenant :

l'obtention (202) d'un phonème d'échantillon d'un utilisateur et d'un identifiant de timbre de l'utilisateur, le phonème d'échantillon étant déterminé sur la base d'un texte d'échantillon correspondant à une parole d'échantillon de l'utilisateur, et l'identifiant de timbre étant configuré pour identifier un timbre de l'utilisateur ;
l'entrée (204) du phonème d'échantillon dans un premier sous-modèle du modèle de synthèse vocale, pour obtenir une caractéristique postérieure phonétique prédite du phonème d'échantillon, la caractéristique postérieure phonétique prédite étant configurée pour indiquer une caractéristique de chaque phonème dans le phonème d'échantillon et une caractéristique de durée de prononciation de chaque phonème dans le phonème d'échantillon ;
l'entrée (206) de la caractéristique postérieure phonétique prédite et de l'identifiant de timbre dans un deuxième sous-modèle du modèle de synthèse vocale, pour obtenir une parole prédite correspondant au texte d'échantillon et à l'identifiant de timbre, dans laquelle la caractéristique postérieure phonétique prédite est entrée dans le deuxième sous-modèle pour obtenir une variable intermédiaire prédite, et la parole prédite est obtenue sur la base de la variable intermédiaire prédite, et la variable intermédiaire prédite étant configurée pour indiquer une caractéristique de domaine fréquentiel de la parole prédite ;
l'entraînement (208) du premier sous-modèle selon la caractéristique postérieure phonétique prédite ; et l'entraînement du deuxième sous-modèle selon la parole prédite et la variable intermédiaire prédite,
**caractérisé en ce que** le deuxième sous-modèle comprend un encodeur antérieur et un décodeur ; et dans lequel l'entrée de la caractéristique postérieure phonétique prédite et de l'identifiant de timbre dans un deuxième sous-modèle du modèle de synthèse vocale, pour obtenir une parole prédite correspondant au texte d'échantillon et à l'identifiant de timbre comprend :

l'entrée de la caractéristique postérieure phonétique prédite et de l'identifiant de timbre dans l'encodeur antérieur, pour obtenir la variable intermédiaire prédite ; et
l'exécution d'une transformée de Fourier inverse sur la variable intermédiaire prédite par le décodeur, pour obtenir la parole prédite,

dans lequel le décodeur comprend une structure de transformée de Fourier inverse et une structure de suréchantillonnage ; et l'exécution d'une transformée de Fourier inverse sur la variable intermédiaire prédite par le décodeur, pour obtenir la parole prédite comprend :

l'obtention de la parole prédite en restaurant une partie basse fréquence de la parole prédite par la structure de suréchantillonnage et en modélisant une partie moyenne-haute fréquence de la parole prédite par la structure de transformée de Fourier inverse.

2. Procédé selon la revendication 1, dans lequel l'encodeur antérieur comprend un encodeur postérieur phonétique ; et dans lequel l'entrée de la caractéristique postérieure phonétique prédite et de l'identifiant de timbre dans l'encodeur antérieur, pour obtenir la variable intermédiaire prédite comprend :

l'entrée de la caractéristique postérieure phonétique prédite et de l'identifiant de timbre dans l'encodeur postérieur phonétique, et le calcul d'une valeur moyenne et d'une variance de la distribution antérieure de la variable intermédiaire prédite, pour obtenir la variable intermédiaire prédite.

3. Procédé selon la revendication 1, dans lequel le deuxième sous-modèle comprend en outre un encodeur postérieur; et dans lequel l'entraînement du deuxième sous-modèle selon la variable intermédiaire prédite comprend :

l'obtention de la parole d'échantillon ;

l'entrée de la parole d'échantillon dans l'encodeur postérieur, pour obtenir une variable intermédiaire réelle ; et le calcul d'une perte d'entropie relative entre la variable intermédiaire prédite et la variable intermédiaire réelle, pour entraîner le deuxième sous-modèle.

4. Procédé selon la revendication 3, dans lequel l'encodeur postérieur comprend un prédicteur postérieur ; et dans lequel l'entrée de la parole d'échantillon dans l'encodeur postérieur, pour obtenir une variable intermédiaire réelle comprend :

l'entrée de la parole d'échantillon dans le prédicteur postérieur, et le calcul d'une valeur moyenne et d'une variance de la distribution postérieure de la variable intermédiaire réelle, pour obtenir la variable intermédiaire réelle.

5. Procédé selon la revendication 1, dans lequel l'encodeur antérieur comprend en outre un prédicteur postérieur phonétique, et le prédicteur postérieur phonétique est configuré pour produire en sortie, dans un processus de pré-entraînement du deuxième sous-modèle, une caractéristique postérieure phonétique prédite selon une variable intermédiaire prédite dans le processus de pré-entraînement ; et dans lequel le procédé comprend en outre :

dans le processus de pré-entraînement du deuxième sous-modèle, le calcul d'une fonction de perte entre la caractéristique postérieure phonétique prédite et une caractéristique postérieure phonétique réelle dans le processus de pré-entraînement, pour entraîner le deuxième sous-modèle.

6. Procédé selon la revendication 1, comprenant en outre

l'obtention d'une caractéristique de fréquence fondamentale correspondant au phonème d'échantillon et d'un identifiant de style, dans laquelle la caractéristique de fréquence fondamentale est obtenue en extrayant des caractéristiques du phonème d'échantillon par le premier sous-modèle sur la base de l'identifiant de style, et l'identifiant de style indique un style de parole ;

dans laquelle l'entrée de la caractéristique postérieure phonétique prédite et de l'identifiant de timbre dans l'encodeur antérieur, pour obtenir la variable intermédiaire prédite comprend :

l'entrée de la caractéristique postérieure phonétique prédite, de l'identifiant de timbre et de la caractéristique de fréquence fondamentale dans l'encodeur antérieur, pour obtenir la variable intermédiaire prédite correspondant à l'identifiant de style.

7. Procédé selon la revendication 1, dans lequel la structure de transformée de Fourier inverse comprend une pluralité de couches convolutionnelles unidimensionnelles, et une dernière couche convolutionnelle unidimensionnelle de la pluralité de couches convolutionnelles unidimensionnelles qui est connectée à une couche de transformée de Fourier inverse.

8. Procédé selon l'une quelconque des revendications 1 à 7, dans lequel le décodeur comprend en outre un discriminateur, et le discriminateur et les parties du modèle de synthèse vocale autres que le discriminateur forment un réseau antagoniste génératif ; et dans lequel le procédé comprend en outre :

l'entrée de la parole prédite dans le discriminateur, pour obtenir un résultat de discrimination de la parole prédite, dans lequel le résultat de discrimination est configuré pour indiquer que la parole prédite est une information réelle ou une information prédite ; et

la détermination d'une perte antagoniste générative selon le résultat de discrimination et une source réelle de la parole prédite, pour entraîner le réseau antagoniste génératif.

9. Procédé selon l'une quelconque des revendications 1 à 7, dans lequel le premier sous-modèle comprend un encodeur de texte, un dispositif de régulation de durée et un réseau de post-traitement ;

dans lequel l'entrée du phonème d'échantillon dans un premier sous-modèle du modèle de synthèse vocale, pour obtenir une caractéristique postérieure phonétique prédite du phonème d'échantillon comprend :

l'obtention d'une caractéristique de durée de prononciation réelle correspondant à chaque phonème dans le phonème d'échantillon ;

l'exécution d'un encodage sur le phonème d'échantillon par l'encodeur de texte, pour obtenir une caractéristique de couche cachée du phonème d'échantillon ;

l'exécution d'une expansion de trames sur la caractéristique de couche cachée du phonème d'échantillon par le dispositif de régulation de durée selon la caractéristique de durée de prononciation réelle correspondant à chaque phonème dans le phonème d'échantillon ; et

l'exécution d'un traitement de convolution sur la caractéristique de couche cachée du phonème d'échantillon soumise à l'expansion de trames par le réseau de post-traitement, pour obtenir la caractéristique postérieure phonétique prédite du phonème d'échantillon.

10. Procédé selon la revendication 9, dans lequel le premier sous-modèle comprend en outre un prédicteur de durée, et le procédé comprend en outre :

la prédiction de la caractéristique de couche cachée du phonème d'échantillon par le prédicteur de durée, pour obtenir une caractéristique de durée de prononciation prédite correspondant à chaque phonème dans le phonème d'échantillon; et

le calcul d'une perte entre la caractéristique de durée de prononciation prédite et la caractéristique de durée de prononciation réelle, pour entraîner le premier sous-modèle, dans lequel après que l'entraînement est terminé, la caractéristique de durée de prononciation réelle entrée dans le dispositif de régulation de durée est remplacée par la caractéristique de durée de prononciation prédite obtenue par le prédicteur de durée.

11. Procédé selon la revendication 9, comprenant en outre :

l'obtention d'un identifiant de style ;

dans lequel l'exécution d'un encodage sur le phonème d'échantillon par l'encodeur de texte, pour obtenir une caractéristique de couche cachée du phonème d'échantillon comprend :

l'exécution d'un encodage sur le phonème d'échantillon par l'encodeur de texte selon l'identifiant de style, pour obtenir la caractéristique de couche cachée du phonème d'échantillon correspondant à l'identifiant de style.

12. Procédé selon la revendication 11, dans lequel le premier sous-modèle comprend en outre un prédicteur de fréquence fondamentale ; et dans lequel le procédé comprend en outre :

la prédiction de la caractéristique de couche cachée du phonème d'échantillon par le prédicteur de fréquence fondamentale, pour obtenir la caractéristique de fréquence fondamentale correspondant à l'identifiant de style et au phonème d'échantillon, dans laquelle la caractéristique de fréquence fondamentale est entrée dans le deuxième sous-modèle, pour obtenir la parole prédite correspondant à l'identifiant de style.

13. Procédé de synthèse vocale, exécutable par un dispositif informatique, **caractérisé en ce que** le dispositif informatique comprend le modèle de synthèse vocale obtenu par entraînement en exécutant le procédé selon l'une quelconque des revendications 1 à 12, et le procédé comprenant :

l'obtention (902) d'un phonème d'un utilisateur et d'un identifiant de timbre de l'utilisateur, le phonème étant déterminé sur la base d'un texte, et l'identifiant de timbre étant configuré pour indiquer un timbre de l'utilisateur ;

l'entrée (904) du phonème dans le premier sous-modèle du modèle de synthèse vocale, pour obtenir une caractéristique postérieure phonétique du phonème ; et

l'entrée (906) de la caractéristique postérieure phonétique et de l'identifiant de timbre dans le deuxième sous-modèle du modèle de synthèse vocale, pour obtenir une parole correspondant au texte et à l'identifiant de timbre.

Text 101

Style identifier —— Text encoder
1011

Duration predictor 1012

Fundamental frequency predictor 1013

Fundamental frequency feature

Duration regulation device 1014

Post-processing network 1015

Phoneme posterior feature

102

Prior encoder

$f_\theta(z)$ ←—— Regularized flow 1022 ←—— Z ←—— Posterior predictor 1024 ←— Linear spectrum

Posterior encoder

KL divergence loss

Average value, and variance

Phoneme posterior predictor 1023

Phoneme posterior feature loss

Phoneme posterior encoder 1021

Phoneme posterior feature, timbre identifier, and fundamental frequency feature

Decoder    Timbre identifier
1025

Inverse Fourier transform decoder

Speech

Discriminator 1026

FIG. 1

Obtain a sample phoneme of a target user and a timbre identifier of the target user

202

Input the sample phoneme into a first submodel of the speech synthesis model, to obtain a predicted phonetic posteriorgram of the sample phoneme

204

Input the predicted phonetic posteriorgram and the timbre identifier into a second submodel of the speech synthesis model, to obtain predicted speech corresponding to a sample text and the timbre identifier

206

Train the first submodel according to the predicted phonetic posteriorgram, and train the second submodel according to the predicted speech and a predicted intermediate variable

208

FIG. 2

302

Obtain a sample phoneme of a target user and a timbre identifier of the target user

304

Perform encoding on the sample phoneme through a text encoder of a first submodel of a speech synthesis model, to obtain a hidden layer feature of the sample phoneme

306

Perform frame expansion processing on the hidden layer feature of the sample phoneme through a duration regulation device of the first submodel of the speech synthesis model

308

Perform convolution processing on the hidden layer feature of the sample phoneme obtained after frame expansion through a post-processing network of the first submodel of the speech synthesis model, to obtain a predicted phonetic posteriorgram of the sample phoneme

310

Train the first submodel according to the predicted phonetic posteriorgram

312

Input the predicted phonetic posteriorgram and the timbre identifier into a prior encoder of a second submodel, to obtain a predicted intermediate variable

314

Perform inverse Fourier transform on the predicted intermediate variable through a decoder of the second submodel, to obtain a predicted speech

316

Train the second submodel according to the predicted speech and the predicted intermediate variable

FIG. 3

FIG. 4

z       Speaker id

```
                ┌─────────────────────┐  501
                │   One-dimensional   │
                │     convolution     │
                └─────────────────────┘

                ┌─────────────────────┐  502
                │   Residual network  │
                └─────────────────────┘

                ┌─────────────────────┐  501
                │   One-dimensional   │
                │     convolution     │
                └─────────────────────┘

                ┌─────────────────────┐  502
                │   Residual network  │
                └─────────────────────┘

                ┌─────────────────────┐  501
                │   One-dimensional   │
                │     convolution     │
                └─────────────────────┘

               ╱  Inverse Fourier transform  ╲  503
              ╱─────────────────────────────────╲
```

Speech

FIG. 5

z          Speaker id

One-dimensional
convolution          601

Residual network          602

One-dimensional
convolution          601

Residual network          602

One-dimensional
convolution          601

Inverse Fourier transform          603

Upsampling network          604

Residual network          602

Upsampling network          604

Residual network          602

Upsampling network          604

Residual network          602

Pseudo-orthogonal
mirror filter bank          605

Speech

FIG. 6

701

702

Affine coupling layer

Embedded layer
identifier

FIG. 7

Speech

801

801

801

Fourier transform

Fourier transform

Fourier transform

802

802

802

Two-dimensional
convolution

Two-dimensional
convolution

Two-dimensional
convolution

802

802

802

Two-dimensional
convolution

Two-dimensional
convolution

Two-dimensional
convolution

802

802

802

Two-dimensional
convolution

Two-dimensional
convolution

Two-dimensional
convolution

802

802

802

Two-dimensional
convolution

Two-dimensional
convolution

Two-dimensional
convolution

Output

Output

Output

FIG. 8

```
┌────────────────────────────────────────────────────────────────────┐          902
│                                                                    │          ⌐
│   Obtain a target phoneme of a target user and a timbre identifier of the target user │
│                                                                    │
└────────────────────────────────────────────────────────────────────┘
                                    │
                                    ▼
┌────────────────────────────────────────────────────────────────────┐          904
│  Input the target phoneme into a first submodel of a speech synthesis model, to obtain a │
│               phonetic posteriorgram of the target phoneme              │
└────────────────────────────────────────────────────────────────────┘
                                    │
                                    ▼
┌────────────────────────────────────────────────────────────────────┐          906
│  Input the phonetic posteriorgram and the timbre identifier into a second submodel of the │
│    speech synthesis model, to obtain target speech corresponding to a target text and the │
│                            timbre identifier                          │
└────────────────────────────────────────────────────────────────────┘
```

FIG. 9

```
┌────────────────────────┐     1001
│    Obtaining module    │
└────────────────────────┘
            │
┌────────────────────────┐     1002
│   Input/Output module  │
└────────────────────────┘
            │
┌────────────────────────┐     1003
│    Training module      │
└────────────────────────┘
```

FIG. 10

```
┌────────────────────────┐     1101
│    Obtaining module    │
└────────────────────────┘
            │
┌────────────────────────┐     1102
│   Input/Output module  │
└────────────────────────┘
```

FIG. 11

Computer device 1200

1212

1206

Network

Display 1208

Input device 1209

Input/Output controller 1210

Input/Output system

1201

1211

Central processing unit

Network interface unit

1205

System bus

1204

1202

Random access memory

1203

Read-only memory

System memory

1207

Operating system 1213

Application 1214

Mass storage device

Another program module 1215

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211121568X